(19) Europäisches Patentamt / European Patent Office / Office européen des brevets

(11) **EP 4 391 683 A1**

(12) **EUROPEAN PATENT APPLICATION**
published in accordance with Art. 153(4) EPC

(43) Date of publication:
**26.06.2024 Bulletin 2024/26**

(21) Application number: **22876634.1**

(22) Date of filing: **06.07.2022**

(51) International Patent Classification (IPC):
*H04W 72/04* (2023.01)      *H04L 5/00* (2006.01)
*H04J 11/00* (2006.01)      *H04W 48/10* (2009.01)

(52) Cooperative Patent Classification (CPC):
**H04J 11/00; H04L 5/00; H04W 48/10; H04W 72/04**

(86) International application number:
**PCT/KR2022/009731**

(87) International publication number:
**WO 2023/054859 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.09.2021 KR 20210129120**
**12.11.2021 KR 20210155482**

(71) Applicant: **Samsung Electronics Co., Ltd.**
**Suwon-si, Gyeonggi-do 16677 (KR)**

(72) Inventors:
• **YOON, Suha**
  **Suwon-si, Gyeonggi-do 16677 (KR)**
• **RYU, Hyunseok**
  **Suwon-si, Gyeonggi-do 16677 (KR)**
• **KIM, Youngbum**
  **Suwon-si, Gyeonggi-do 16677 (KR)**
• **MYUNG, Seho**
  **Suwon-si, Gyeonggi-do 16677 (KR)**

(74) Representative: **Nederlandsch Octrooibureau**
**P.O. Box 29720**
**2502 LS The Hague (NL)**

(54) **BANDWIDTH-BASED SYNCHRONIZATION SIGNAL CONFIGURATION METHOD AND DEVICE**

(57)      The present disclosure relates to a 5G or 6G communication system for supporting a higher data transmission rate. In addition, the present disclosure relates to a method carried out by a base station of a wireless communication system, and a device for carrying out same, the method comprising the steps of: identifying whether a frequency band operated by a base station uses a bandwidth that is narrower than a preset bandwidth; if a bandwidth that is narrower than the preset bandwidth is used, determining a subcarrier spacing (SCS) that is narrower than a preset SCS; generating a synchronization signal block (SSB) using the determined SCS; and transmitting the SSB, wherein the determined SCS is smaller than 15 kHz.

FIG. 1

EP 4 391 683 A1

**Description**

**[Technical Field]**

The disclosure relates to a bandwidth-based synchronization signal configuration method and device. More specifically, the disclosure relates to a method and a device for designing and configuring a synchronization signal so that a wireless communication system (e.g., 5G or new radio (NR)) can operate even in a narrower bandwidth.

**[Background Art]**

Fifth generation (5G) mobile communication technologies define broad frequency bands such that high transmission rates and new services are possible, and can be implemented not only in "Sub 6 gigahertz (GHz)" bands such as 3.5GHz, but also in "Above 6GHz" bands referred to as millimeter wave (mmWave) including 28GHz and 39GHz. In addition, it has been considered to implement sixth generation (6G) mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive multi input multi output (MIMO) for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BandWidth Part (BWP), new channel coding methods such as a Low Density Parity Check (LDPC) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, new radio (NR) user equipment (UE) Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, Integrated Access and Backhaul (IAB) for providing a node for network service area expansion by supporting a wireless backhaul link and an access link in an integrated manner, mobility enhancement including conditional handover and Dual Active Protocol Stack (DAPS) handover, and two-step random access for simplifying random access procedures (2-step random access channel (RACH) for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and Artificial Intelligence (AI) from the design stage and internalizing end-to-end AI support functions, and next-generation distributed computing technology for implementing services at levels of complexity exceeding the limit of UE operation capability by utilizing ultra-high-performance communication and computing resources.

[Disclosure of Invention]

[Technical Problem]

The technical aspect to be achieved in various embodiments of the disclosure is to provide a bandwidth-based wireless communication system operation method and device.

In addition, the technical aspect to be achieved in various embodiments of the disclosure is to provide a synchronization method for operating a wireless communication system in a narrower bandwidth, and a method and a device for configuring a parameter to support a narrower bandwidth and performing communication by using the same.

[Solution to Problem]

An embodiment of the disclosure may provide a method performed by a base station in a wireless communication system, the method including: identifying whether a frequency band operated by the base station uses a bandwidth narrower than a preconfigured bandwidth; when the bandwidth narrower than the preconfigured bandwidth is used, determining a subcarrier spacing (SCS) smaller than a preconfigured SCS; generating a synchronization signal block (SSB) by using the determined SCS; and transmitting the SSB, wherein the determined SCS is lower than 15 kHz.

In addition, an embodiment of the disclosure may provide a method performed by a terminal in a wireless communication system, the method including: identifying whether a frequency band accessed by the terminal uses a bandwidth narrower than a preconfigured bandwidth; when the bandwidth narrower than the preconfigured bandwidth is used, determining a subcarrier spacing (SCS) smaller than a preconfigured SCS; and obtaining a synchronization signal block (SSB) by using the determined SCS, wherein the determined SCS is lower than 15 kHz.

In addition, an embodiment of the disclosure may provide a base station in a wireless communication system, the base station including a transceiver and a controller configured to perform control to identify whether a frequency band operated by the base station uses a bandwidth narrower than a preconfigured bandwidth, when the bandwidth narrower than the preconfigured bandwidth is used, determine a subcarrier spacing (SCS) smaller than a preconfigured SCS, generate a synchronization signal block (SSB) by using the determined SCS, and transmit the SSB, wherein the determined SCS is lower than 15 kHz.

In addition, an embodiment of the disclosure may provide a terminal in a wireless communication system, the terminal including a transceiver and a controller configured to perform control to identify whether a frequency band accessed by the terminal uses a bandwidth narrower than a preconfigured bandwidth, when the bandwidth narrower than the preconfigured bandwidth is used, determine a subcarrier spacing (SCS) smaller than a preconfigured SCS, and obtain a synchronization signal block (SSB) by using the determined SCS, wherein the determined SCS is lower than 15 kHz.

The technical subjects pursued in various embodiments of the disclosure may not be limited to the above-mentioned technical subjects, and other technical subjects which are not mentioned may be clearly understood, through the following descriptions, by those skilled in the art to which the disclosure pertains.

[Advantageous Effects of Invention]

According to various embodiments of the disclosure, a bandwidth-based wireless communication system operation method and device may be provided.

In addition, according to various embodiments of the disclosure, a synchronization method for operating a wireless communication system in a narrower bandwidth, and a method and a device for configuring a parameter to support a narrower bandwidth and performing communication by using the same may be provided.

[Brief Description of Drawings]

FIG. 1 is a diagram illustrating a structure of a next-generation mobile communication system according to an embodiment of the disclosure;
FIG. 2 is a diagram illustrating a radio protocol structure of a next-generation mobile communication system according to an embodiment of the disclosure;

FIG. 3 is a diagram illustrating a basic structure of a time-frequency domain, which is a radio resource area in which data or a control channel is transmitted in a 5G communication system, according to an embodiment of the disclosure;

FIG. 4 is a diagram illustrating an example of a slot structure considered in a 5G system according to an embodiment of the disclosure;

FIG. 5 is a diagram illustrating an example of a configuration for a bandwidth part in a 5G communication system according to an embodiment of the disclosure.

FIG. 6 is a diagram illustrating an example in which frequency and time resources are allocated for information transmission in an NR system according to an embodiment of the disclosure;

FIG. 7 is a diagram illustrating a state in which a physical broadcast channel and a synchronization signal of an NR system are mapped in frequency and time domains, according to an embodiment of the disclosure;

FIG. 8 is a diagram illustrating an SSB configuration according to a subcarrier spacing according to an embodiment of the disclosure;

FIG. 9 is a diagram illustrating symbols to which one SS/PBCH block is mapped within a slot, according to an embodiment of the disclosure;

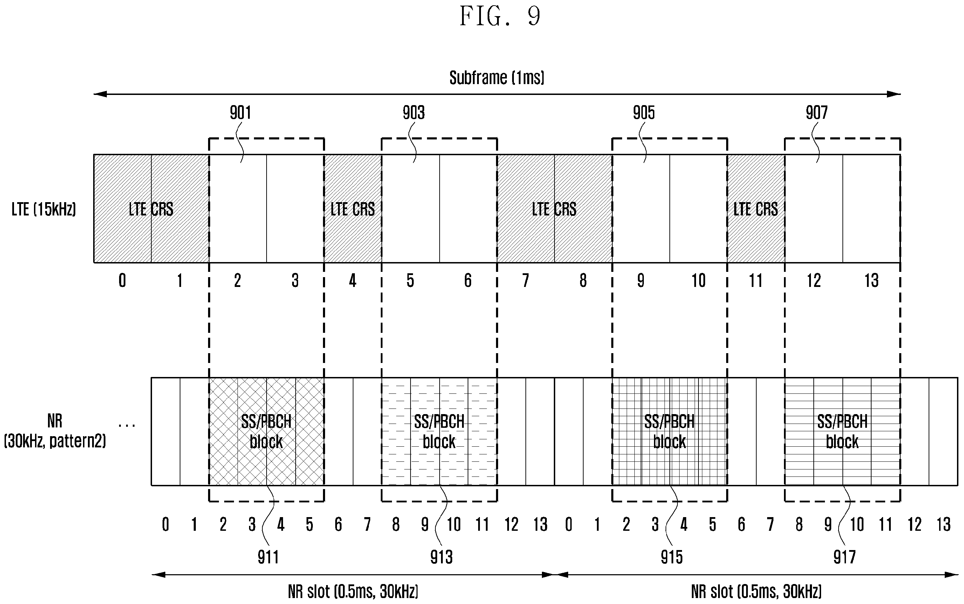

FIG. 9 is a diagram illustrating a symbol through which an SS/PBCH block can be transmitted according to a subcarrier spacing, according to an embodiment of the disclosure;

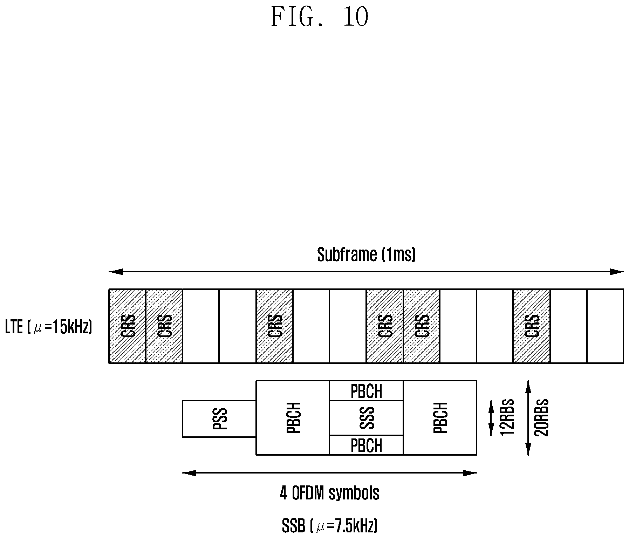

FIG. 10 is a diagram illustrating a problem which occurs due to different subcarrier spacings in different communication systems according to an embodiment of the disclosure;

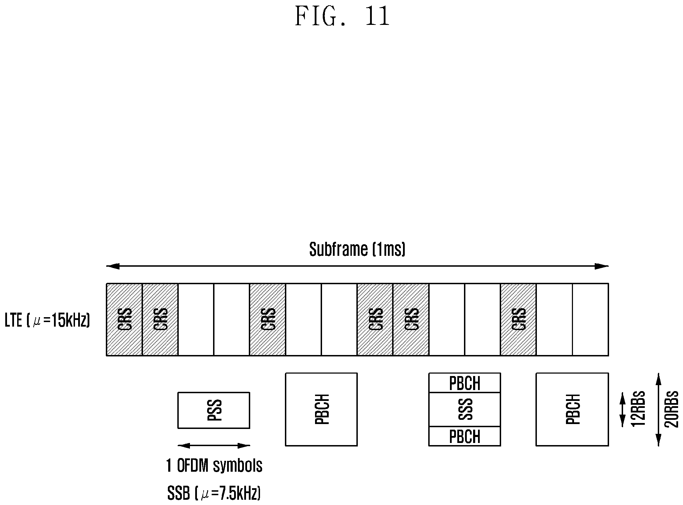

FIG. 11 is a diagram illustrating a structure of a discontinuous SSB according to an embodiment of the disclosure;

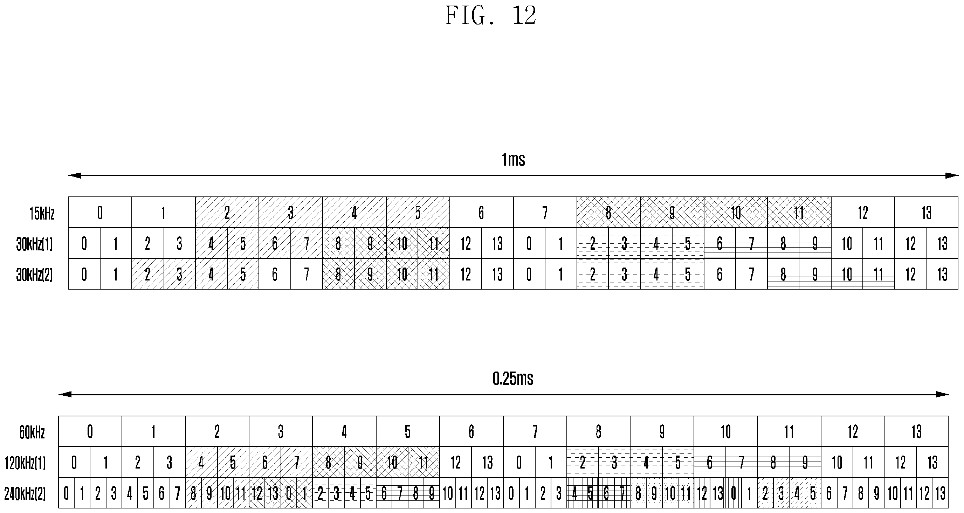

FIG. 12 is a diagram illustrating a symbol through which an SS/PBCH block can be transmitted according to a subcarrier spacing, according to an embodiment of the disclosure;

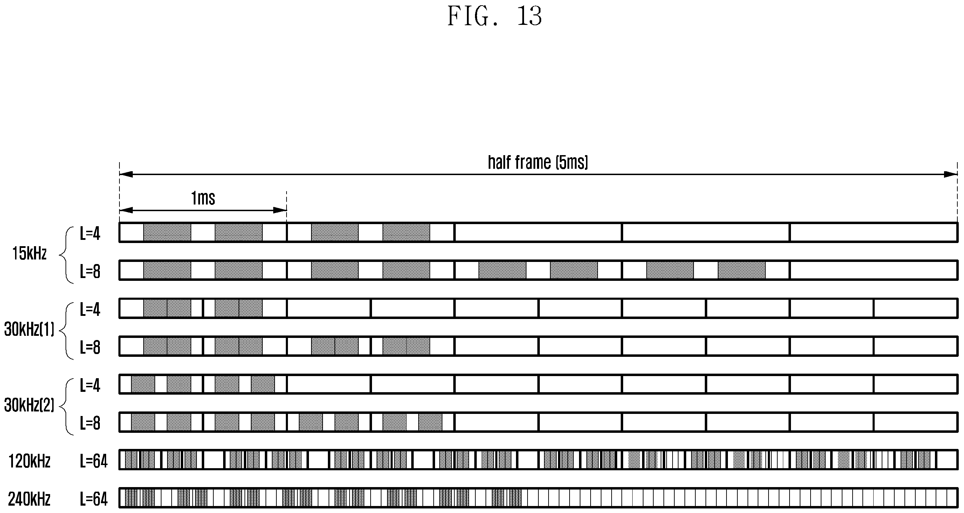

FIG. 13 is another diagram illustrating a symbol through which an SS/PBCH block can be transmitted according to a subcarrier spacing, according to an embodiment of the disclosure;

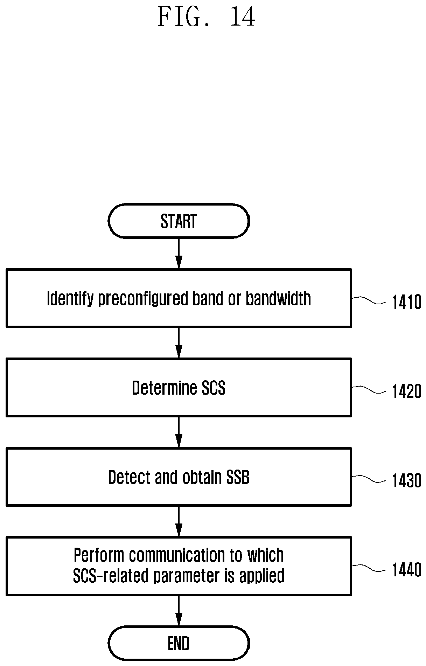

FIG. 14 is a diagram illustrating an operation of a terminal according to various embodiments of the disclosure;

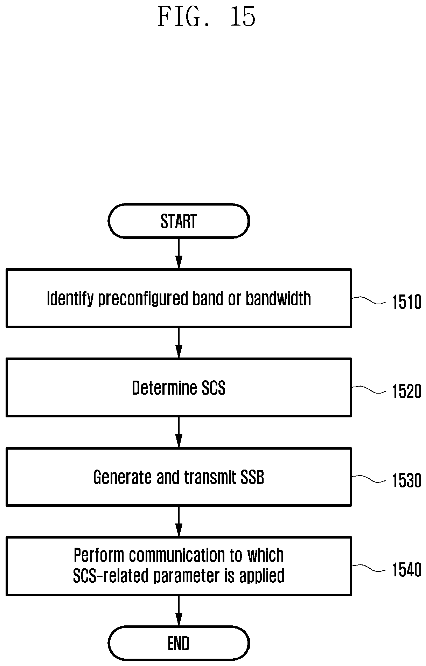

FIG. 15 is a diagram illustrating an operation of a base station according to various embodiments of the disclosure;

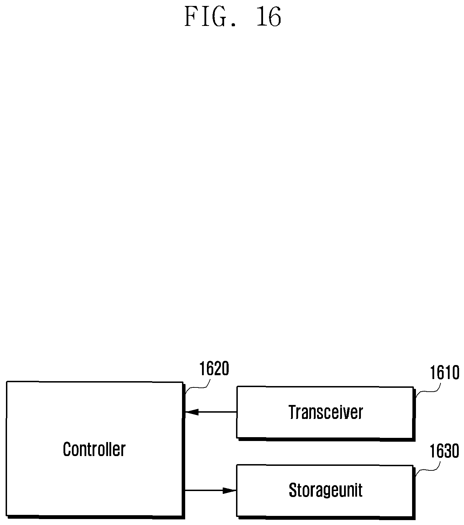

FIG. 16 is a diagram illustrating a structure of a terminal according to an embodiment of the disclosure; and

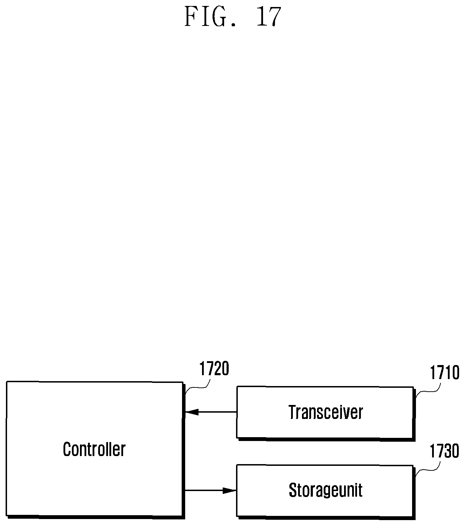

FIG. 17 is a diagram illustrating a structure of a base station according to an embodiment of the disclosure.

**[Mode for the Invention]**

Hereinafter, embodiments of the disclosure will be described in detail with reference to the accompanying drawings.

In describing the embodiments, descriptions related to technical contents well-known in the art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Further, the size of each element does not completely reflect the actual size. In the drawings, identical or corresponding elements are provided with identical reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements. Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block of the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" or may be implemented to reproduce one or more CPUs within a device or a security multimedia card. Furthermore, the "unit" in the embodiments may include one or more processors.

In the following description, a base station is an entity that allocates resources to terminals, and may be at least one of a Node B, a base station (BS), an eNode B (eNB), a gNode B (gNB), a wireless access unit, a base station controller, and a node on a network. A terminal may include a user equipment (UE), a mobile station (MS), a cellular phone, a smartphone, a computer, or a multimedia system capable of performing communication functions. Furthermore, embodiments of the disclosure as described below may also be applied to other communication systems having similar technical backgrounds or channel types to the embodiments of the disclosure. In addition, based on determinations by those skilled in the art, the embodiments of the disclosure may also be applied to other communication systems through some modifications without significantly departing from the scope of the disclosure. Examples of such communication systems may include 5th generation mobile communication technologies (5G, new radio, and NR) developed beyond LTE-A, and in the following description, the "5G" may be the concept that covers the exiting LTE, LTE-A, or other similar services. Moreover, based on determinations by those skilled in the art, the disclosure may also be applied to other communication systems through some modifications without significantly departing from the scope of the disclosure.

In the following description, terms for identifying access nodes, terms referring to network entities or network functions (NFs), terms referring to messages, terms referring to interfaces between network entities, terms referring to various identification information, and the like are illustratively used for the sake of descriptive convenience. Therefore, the disclosure is not limited by the terms as used below, and other terms referring to subjects having equivalent technical meanings may be used.

In the following description of the disclosure, some of terms and names defined in the 3rd generation partnership project long term evolution (3GPP LTE) and/or 3GPP new radio (3GPP NR) standards may be used for the sake of descriptive convenience. However, the disclosure is not limited by these terms and names, and may be applied in the same way to systems that conform other standards.

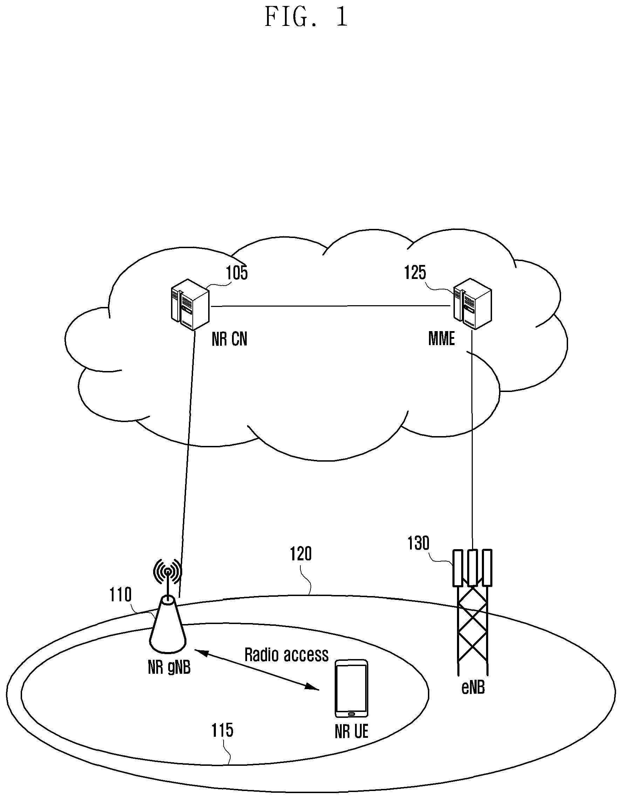

FIG. 1 is a diagram illustrating a structure of a next-generation mobile communication system according to an embodiment of the disclosure.

Referring to FIG. 1, a radio access network of a next-generation mobile communication system (hereinafter, hereinafter, referred to as NR or 5g) may include a next-generation base station (new radio node B, hereinafter, referred to as an NR gNB or an NR base station) 110 and a next-generation radio core network (new radio core network, NR CN) 105. A next-generation radio user terminal (new radio user equipment, an NR UE or a terminal) 115 may access an external network via the NR gNB 110 and the NR CN 105.

In FIG. 1, the NR gNB 110 may correspond to an evolved node B (eNB) of the existing LTE system. The NR gNB is connected to the NR UE 115 via a radio channel, and may provide a service superior to that of the existing node B. In the next-generation mobile communication system, all user traffic may be serviced via a shared channel. Therefore, a device for performing scheduling by collecting status information such as a buffer status, an available transmission power status, and a channel status of UEs may be required, and the NR gNB 110 may be in charge of the scheduling. One NR gNB may control multiple cells. In the next-generation mobile communication system, a bandwidth equal to or greater than a current maximum bandwidth may be applied in order to implement high-speed data transmission compared to the current LTE. In addition, a beamforming technology may be additionally applied using orthogonal frequency division multiplexing (OFDM) as a radio access technology. In addition, an adaptive modulation and coding (hereinafter, referred to as AMC) scheme for determining a modulation scheme and a channel coding rate according to a channel status of a terminal may be applied.

The NR CN 105 may perform functions such as mobility support, bearer configuration, and QoS configuration. The NR CN is a device responsible for various control functions as well as a mobility management function for a terminal, and may be connected to multiple base stations. In addition, the next-generation mobile communication system may be linked with the existing LTE system, and the NR CN may be connected to an MME 125 via a network interface. The MME may be connected to an eNB 130, which is the existing base station.

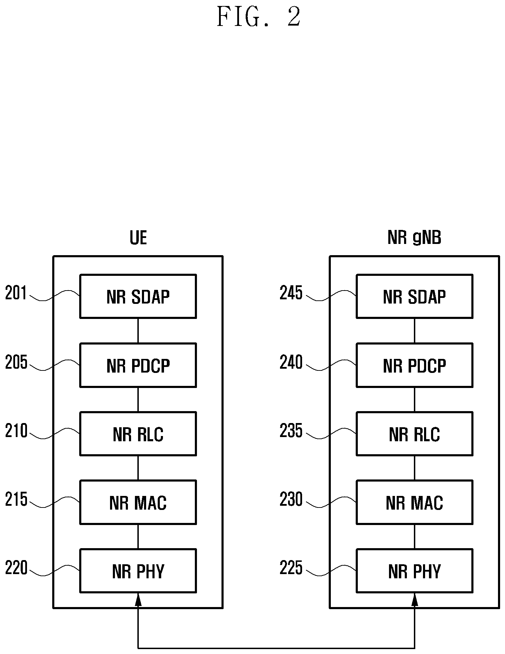

FIG. 2 is a diagram illustrating a radio protocol structure of a next-generation mobile communication system according to an embodiment of the disclosure.

Referring to FIG. 2, a radio protocol of a next-generation mobile communication system may include NR service data adaptation protocols (SDAPs) 201 and 245, packet data convergence protocols (NR PDCPs) 205 and 240, NR RLCs 210 and 235, medium access controls (NR MACs) 215 and 230, and NR physical (PHY) 220 and 225 in a terminal and an NR base station, respectively.

The main functions of the NR SDAPs 201 and 245 may include some of the following functions.

- User data transfer function (transfer of user plane data)
- Mapping function of a QoS flow and a data bearer for an uplink and a downlink (mapping between a QoS flow and a DRB for both DL and UL)
- Function of marking a QoS flow ID for an uplink and a downlink (marking QoS flow ID in both DL and UL packets)
- Function of mapping a reflective QoS flow to a data bearer for uplink SDAP PDUs (reflective QoS flow to DRB mapping for the UL SDAP PDUs).

With regard to an SDAP layer device, the terminal may receive a configuration of information on whether to use a header of the SDAP layer device or whether to use a function of the SDAP layer device for each PDCP layer device, for each bearer, or for each logical channel through a radio resource control (RRC) message. When an SDAP header is configured, a 1-bit non-access stratum (NAS) quality of service (QoS) reflective configuration indicator (NAS reflective QoS) and a 1-bit access stratum (AS) QoS reflective configuration indicator (AS reflective QoS) of the SDAP header may indicate the terminal to update or reconfigure mapping information relating to a QoS flow and a data bearer for an uplink and a downlink. The SDAP header may include QoS flow ID information indicating QoS. The QoS information may be used as data processing priority, scheduling information, or the like to support a seamless service.

The main functions of the NR PDCPs 205 and 240 may include some of the following functions.

- Header compression and decompression function (Header compression and decompression: ROHC only)
- User data transmission function (Transfer of user data)
- In-sequence delivery function (In-sequence delivery of upper layer PDUs)
- Out-of-sequence delivery function (Out-of-sequence delivery of upper layer PDUs)
- Sequence reordering function (PDCP PDU reordering for reception)
- Duplicate detection function (Duplicate detection of lower layer SDUs)
- Retransmission function (Retransmission of PDCP SDUs)
- Ciphering and deciphering function (Ciphering and deciphering)
- Timer-based SDU discard function (Timer-based SDU discard in uplink.)

In the above description, the sequence reordering function of the NR PDCP device may refer to a function of sequentially reordering PDCP PDUs, received from a lower layer, based on a PDCP sequence number (SN). The sequence reordering function of the NR PDCP device may include a function of delivering data to an upper layer in a reordered sequence, a function of immediately delivering data without considering the sequence, a function of recording lost PDCP PDUs by reordering the sequence, a function of reporting a state of the lost PDCP PDUs to a transmission side, and a function of requesting the retransmission of the lost PDCP PDUs.

The main functions of the NR RLCs 210 and 235 may include some of the following functions.

- Data transmission function (Transfer of upper layer PDUs)
- In-sequence delivery function (In-sequence delivery of upper layer PDUs)
- Out-of-sequence delivery function (Out-of-sequence delivery of upper layer PDUs)
- ARQ function (Error Correction through ARQ)
- Concatenation, segmentation, and reassembly functions (Concatenation, segmentation and reassembly of RLC SDUs)
- Re-segmentation function (Re-segmentation of RLC data PDUs)
- Sequence reordering function (Reordering of RLC data PDUs)
- Duplicate detection function (Duplicate detection)

- Error detection function (Protocol error detection)
- RLC SDU discard function (RLC SDU discard)
- RLC re-establishment function (RLC re-establishment)

In the above description, the in-sequence delivery function of the NR RLC device may refer to a function of sequentially delivering RLC SDUs received from a lower layer to an upper layer. The in-sequence delivery function of the NR RLC device may include a function of, when an original RLC SDU is segmented into several RLC SDUs and received, reassembling and delivering the received RLC SDUs.

The in-sequence delivery function of the NR RLC device may include a function of reassembling the received RLC PUDs, based on an RLC sequence number (SN) or a PDCP SN, a function of recording lost RLC PDUs by reordering the sequence, a function of reporting a state of the lost RLC PDUs to a transmission side, and a function of requesting the retransmission of the lost RLC PDUs.

The in-sequence delivery function of the NR RLC devices 210 and 235 may include a function of, when there is a lost RLC SDU, sequentially delivering only RLC SDUs prior to the lost RLC SDU to an upper layer. In addition, the in-sequence delivery function of the NR RLC device may include a function of, when a predetermined timer has expired even when there is a lost RLC SDU, sequentially delivering all RLC SDUs received before the timer starts to an upper layer. In addition, the in-sequence delivery function of the NR RLC device may include a function of, when a predetermined timer has expired even when there is a lost RLC SDU, sequentially delivering all RLC SDUs received up to now to an upper layer.

The NR RLC devices 210 and 235 may process RLC PDUs in the order of reception and deliver the processed RLC PDUs to the NR PDCP devices 205 and 240 regardless of the order of sequence numbers (out of sequence delivery).

In the case of receiving a segment, the NR RLC devices 210 and 235 may receive segments stored in a buffer or to be received later, reconfigure the segments into one complete RLC PDU, and deliver the reconfigured RLC PDU to the NR PDCP device.

An NR RLC layer may not include a concatenation function, and may perform the function in an NR MAC layer or replace the function with a multiplexing function of the NR MAC layer.

In the above description, the out-of-sequence delivery function of the NR RLC device may refer to a function of directly delivering RLC SDUs received from a lower layer to an upper layer regardless of the sequence. The out-of-sequence delivery function of the NR RLC device may include a function of, when an original RLC SDU is segmented into several RLC SDUs and received, reassembling and delivering the received RLC SDUs. The out-of-sequence delivery function of the NR RLC device may include a function of storing RLC SNs or PDCP SNs of received RLC PDUs and reordering the sequence to record lost RLC PDUs.

The NR MACs 215 and 230 may be connected to multiple NR RLC layer devices configured in one terminal, and the main functions of the NR MAC may include some of the following functions.

- Mapping function (Mapping between logical channels and transport channels)
- Multiplexing and demultiplexing function (Multiplexing/demultiplexing of MAC SDUs)
- Scheduling information reporting function (Scheduling information reporting)
- HARQ function (Error correction through HARQ (hybrid automatic repeat request))
- Priority handling function between logical channels (Priority handling between logical channels of one UE)
- Priority handling function between UEs (Priority handling between UEs by means of dynamic scheduling)
- MBMS service identification function (MBMS service identification)
- Transmission format selection function (Transport format selection)
- Padding function (Padding)

The NR PHY layers 220 and 225 may perform an operation of channel-coding and modulating upper layer data into OFDM symbols to transmit the OFDM symbols through a radio channel, or an operation of demodulating and channel-decoding OFDM symbols received through a radio channel to deliver the demodulated and channel-decoded OFDM symbols to an upper layer.

Hereinafter, a frame structure of a 5G system will be described in more detail with reference to the drawings.

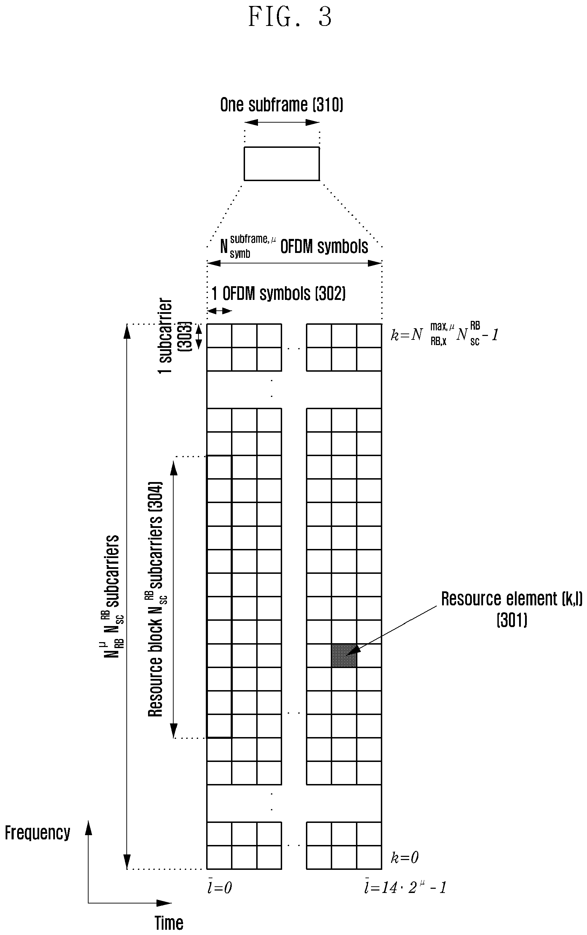

FIG. 3 is a diagram illustrating a basic structure of a time-frequency domain, which is a radio resource area in which data or a control channel is transmitted in a 5G communication system.

In FIG. 3, a horizontal axis represents a time domain, and a vertical axis represents a frequency domain. The basic unit of resources in time and frequency domains is a resource element (RE) 301, and may be defined as 1 orthogonal frequency division multiplexing (OFDM) symbol 302 on a time axis and 1 subcarrier 303 on a frequency axis. In the frequency domain, $N_{SC}^{RB}$ (for example, 12) continuous REs may configure one resource block (RB) 304.

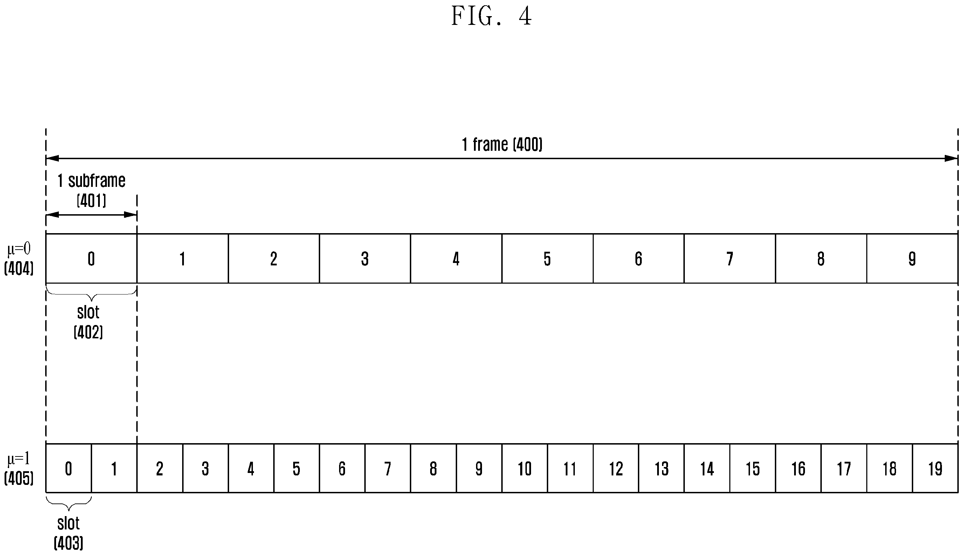

FIG. 4 is a diagram illustrating an example of a slot structure considered in a 5G system.

FIG. 4 illustrates an example of structures of a frame 400, a subframe 401, and a slot 402. One frame 400 may be defined as 10 ms. One subframe 401 may be defined as 1 ms, and therefore, the one frame 400 may be configured by a total of 10 subframes 401. One slot 402 or 403 may be defined to have 14 OFDM symbols (that is, the number of symbols per 1 slot $(N_{symb}^{slot}) = 14$. The one subframe 401 may be configured by one or a plurality of slots 402 and 403, and the number of slot 402 or 403 per 1 subframe 401 may vary depending on a configuration value $\mu$ 404 or 405 for a subcarrier spacing. In an example of FIG. 4, as a subcarrier spacing configuration value, a case where $\mu$=0 404 and a case where $\mu$=1 405 are shown. In the case where $\mu$=0 404, the one subframe 401 may be configured by one slot 402, and in the case where $\mu$=1 405, the one subframe 401 may be configured by two slots 403. That is, the number of slots per 1 subframe ( $N_{slot}^{subframe,\mu}$ ) may vary depending on the configuration value $\mu$ for the subcarrier spacing, and accordingly, the number of slots per 1 frame ( $N_{slot}^{frame,\mu}$ ) may vary. $N_{slot}^{subframe,\mu}$ and $N_{slot}^{frame,\mu}$ depending on each subcarrier spacing configuration $\mu$ may be defined in Table 1 below.

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

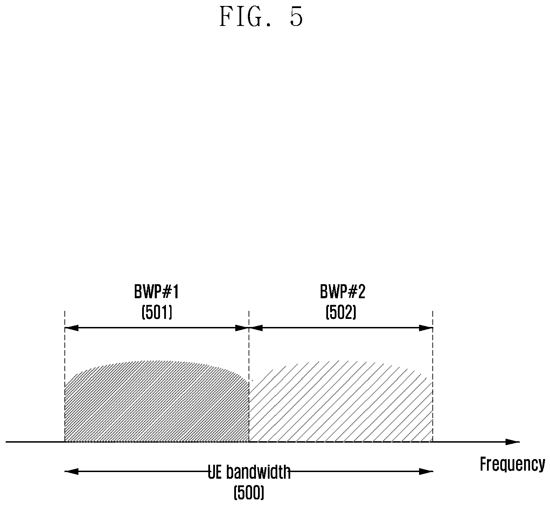

Next, a bandwidth part (BWP) configuration in the 5G communication system will be described in detail with reference to FIG. 5.

FIG. 5 is a diagram illustrating an example of a configuration for a bandwidth part in a 5G communication system.

FIG. 5 illustrates an example in which a UE bandwidth 500 is configured to be two bandwidth parts, that is, bandwidth part #1 (BWP#1) 501 and bandwidth part #2 (BWP#2) 502. A base station may configure one or multiple bandwidth parts to a terminal, and may configure information for each bandwidth part, for example, as shown in Table 2 below. The BWP below may be referred to as BWP configuration information.

[Table 2]

```
BWP ::=                      SEQUENCE {
     Bwp-ID                              BWP-Id,
     locationAndBandwidth         INTEGER (1 ... 65536),
     subcarrierSpacing                  ENUMERATED {n0, n1, n2, n3, n4, n5}
     cyclicPrefix                 ENUMERATED {extended}
}
```

The disclosure is not limited to the above example, and in addition to the above configuration information, various parameters related to a bandwidth part may be configured for the terminal. The information may be delivered from the base station to the terminal through upper layer signaling, for example, RRC signaling. Among the one or multiple configured bandwidth parts, at least one bandwidth part may be activated. Whether to activate the configured bandwidth part may be semi-statically delivered from the base station to the terminal through RRC signaling or dynamically delivered through downlink control information (DCI).

According to some embodiments, the terminal before RRC connection may receive a configuration of an initial bandwidth part (initial BWP) for initial access from the base station through a master information block (MIB). To be more specific, the terminal may receive configuration information on a search space and a control resource set (CORESET) through which a PDCCH for receiving system information (may correspond to remaining system information; RMSI or system Information block 1; SIB1) required for initial access can be transmitted, through the MIB in an initial access stage. The control resource set and search space configured through the MIB may each be considered as identifier (ID) 0. The base station may notify the terminal of configuration information such as frequency allocation information, time allocation information, and numerology for control resource set #0 through the MIB. In addition, the base station may notify the terminal of configuration information on a monitoring period and an occasion for control resource set #0, that is, configuration information on search space #0, through the MIB. The terminal may regard a frequency domain configured as control resource set #0 obtained from the MIB as the initial bandwidth part for initial access. In this case, an identifier (ID) of the initial bandwidth part may be regarded as 0.

MIB information refers to an example of Table 3 below. The terminal may identify control resource set #0 (CORESET #0) through which a PDCCH which schedules a PDSCH through which a system information block (SIB1) is transmitted can be transmitted, through a value of a PDCCH-ConfigSIB1 parameter included in the received MIB.

[Table 3]

```
MIB ::=                              SEQUENCE {
      systemFrameNumber              BIT STRING (SIZE
(6)),
      subCarrierSpacingCommon        ENUMERATED
{scs15or60, scs30or120},
      ssb-SubcarrierOffset           INTEGER (0..15),
      dmrs-TypeA-Position            ENUMERATED
{pos2, pos3},
      pdcch-ConfigSIB1               PDCCH-ConfigSIB1,
      cellBarred                     ENUMERATED
{barred, notBarred},
      intraFreqReselection           ENUMERATED
{allowed, notAllowed},
      spare                          BIT STRING (SIZE
(1))
}
```

The configuration for the bandwidth supported by 5G may be used for various purposes.

According to some embodiments, when a bandwidth supported by the terminal is narrower than a system bandwidth, this may be supported through the bandwidth part configuration. For example, the base station configures a frequency location (configuration information 2) of a bandwidth part to the terminal, and thus the terminal may transmit or receive data at a specific frequency location within the system bandwidth.

In addition, according to some embodiments, the base station may configure a plurality of bandwidth parts to the terminal for the purpose of supporting different numerologies. For example, in order to support both data transmission and reception using a subcarrier spacing of 15 kHz and a subcarrier spacing of 30 kHz for a certain terminal, two bandwidth parts may be configured to have subcarrier spacings of 15 kHz and 30 kHz, respectively. Different bandwidth parts may be frequency division multiplexed, and when data is to be transmitted or received at a specific subcarrier spacing, a bandwidth part configured to have the corresponding subcarrier spacing may be activated.

In addition, according to some embodiments, for the purpose of reducing power consumption of the terminal, the base station may configure bandwidth parts having different sizes of bandwidths to the terminal. For example, when the terminal supports a very large bandwidth, for example, a bandwidth of 100 MHz, and always transmits or receives data through the corresponding bandwidth, very large power consumption may occur. In particular, monitoring of an unnecessary downlink control channel at a large bandwidth of 100 MHz in a situation where there is no traffic may be very inefficient in terms of power consumption. For the purpose of reducing power consumption of the terminal, the base station may configure a relatively narrow bandwidth part, for example, a bandwidth part of 20 MHz to the terminal. In a situation where there is no traffic, the terminal may perform a monitoring operation in a 20 MHz bandwidth, and when data is generated, transmit or receive the data in a bandwidth part of 100 MHz according to an instruction of the base station.

In a method of configuring a bandwidth part, terminals before RRC connection may receive configuration information on an initial bandwidth part through an MIB in the initial access stage. To be more specific, the terminal may receive a configuration of a control resource set (CORESET) for a downlink control channel through which DCI which schedules an SIB can be transmitted from an MIB of a physical broadcast channel (PBCH). A bandwidth of the control resource set configured by the MIB may be considered as the initial bandwidth part, and the terminal may receive the PDSCH through which the SIB is transmitted through the configured initial bandwidth part. In addition to receiving an SIB, the initial bandwidth part may be used for other system information (OSI), paging, and random access.

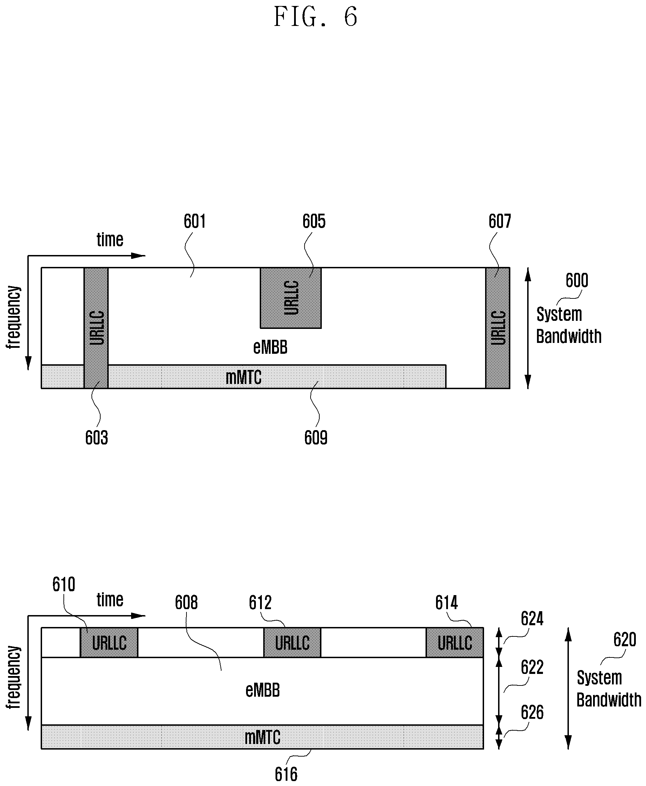

FIG. 6 is a diagram illustrating an example in which frequency and time resources are allocated for information transmission in an NR system according to an embodiment of the disclosure.

Referring to FIG. 6, a manner in which frequency and time resources are allocated for information transmission in each system may be identified. First, a resource for data for an eMBB, URLLC, and mMTC are allocated in an entire system frequency band 600. When URLLC data 603, 605, and 607 are generated while a resource 601 allocated for an eMBB and a resource 609 allocated for an mMTC are allocated and transmitted in a specific frequency band, and the data are required to be transmitted, the resource 601 allocated for the eMBB and the resource 609 allocated for the mMTC may transmit the URLLC data 603, 605, and 607 without emptying or transmitting the already allocated part. Among the above services, URLLC is required to reduce latency, and thus the URLLC data 603, 605, and 607 may be allocated and transmitted to a part of the resource 601 allocated for the eMBB. When URLLC is additionally allocated and transmitted in the resource 601 allocated for the eMBB, eMBB data may not be transmitted in overlapping frequency-time resources, and thus the transmission performance of the eMBB data may be lowered. That is, in the above case, eMBB data transmission failure may occur due to URLLC allocation.

In addition, an entire system frequency band 620 may be divided and used to transmit a service and data in each subband 622, 624, and 626. Information related to the subband configuration may be determined in advance, and the information may be transmitted from the base station to the terminal through upper signaling. Alternatively, the base station or a network node may randomly divide the information related to the subband and provide services to the terminal without transmitting separate subband configuration information. The state is shown in which the subband 622 is used for eMBB data transmission 608, the subband 624 is used for URLLC data transmission 610, 612, and 614, and the subband 626 is used for mMTC data transmission 616.

Throughout the embodiment, the length of a transmission time interval (TTI) used for URLLC transmission may be shorter than the length of a TTI used for eMBB or mMTC transmission. In addition, a response to information related to the URLLC may be transmitted faster than that related to the eMBB or mMTC, and thus the information may be transmitted or received with low delay. A structure of a physical layer channel used for each type to transmit the above three types of services or data may be different. For example, at least one of the length of a transmission time interval (TTI), the allocation unit of a frequency resource, a structure of a control channel, and a data mapping method may be different.

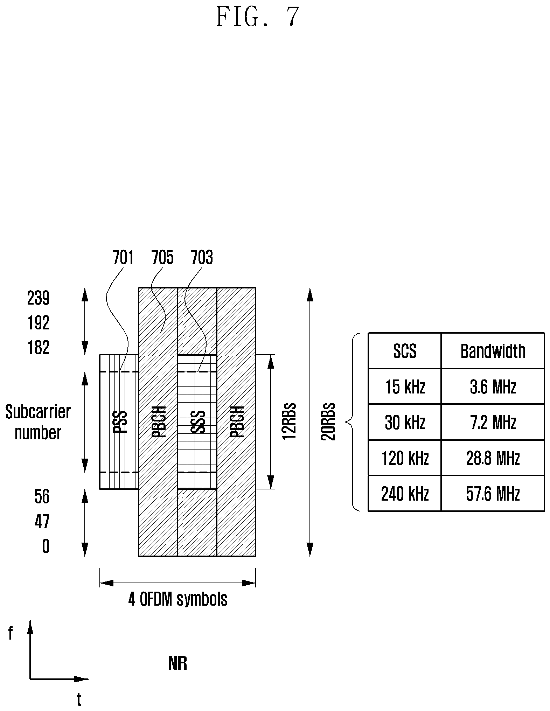

In the above, three types of services and three types of data have been described, but there may be more types of services and data corresponding thereto, and the content of the disclosure may be applied in this case as well. FIG. 7 is a diagram illustrating a state in which a physical broadcast channel and a synchronization signal of an NR system are mapped in frequency and time domains, according to an embodiment of the disclosure.

The 5G communication system provides a synchronization signal block (SSB) for synchronization (time/frequency) of a terminal. The one SSB may be configured by a primary synchronization signal (PSS) 701, a secondary synchronization signal (SSS) 703, and a physical broadcast channel (PBCH) 705. A base station supporting the 5G communication system may transmit at least one SSB. A terminal supporting the 5G communication system may receive at least one SSB and perform synchronization with the base station. The SSB configured by the PSS 701, the SSS 703, and the PBCH 705 is mapped over 4 OFDM symbols on the time axis. The PSS 701 and the SSS 703 are mapped to 12 RBs on the frequency axis, and the PBCH 705 is mapped to 20 RBs on the frequency axis. Since one RB includes 12 subcarriers, when a subcarrier spacing (SCS) changes, the size of the RB changes, and when the size of the RB changes, the size of a frequency band occupied by 12 RBs and 20 RBs may change. The table in FIG. 7 shows how a frequency band of 20 RBs (a frequency band size of an SSB) changes depending on a subcarrier spacing. When an SCS is 15 kHz, a frequency band of one SSB has a bandwidth of 15 kHz * 12 * 20 = 3.6MHz, and when the SCS is 30 kHz, one SSB has a bandwidth of 30 kHz * 12 * 20 = 7.2MHz. A resource area where the PSS 701, the SSS 703, and the PBCH 705 are transmitted may be called an SS/PBCH block. In addition, the SS/PBCH block may be referred to as an SSB block.

The terminal may obtain information (e.g., PDCCH-ConfigSIB1) for a PDCCH to receive system information (e.g., SIB1) required for initial access through an MIB of a PBCH. The PDCCH-COnfigSIB 1 may include configuration information on a search space and a control resource set (CORESET) through which a PDCCH can be transmitted. The control resource set and search space configured through the MIB may be considered as CORESET#0 and search space #0, respectively. The base station may notify the terminal of configuration information for control resource set #0 such as frequency allocation information (e.g., the number of RBs), time allocation information (e.g., the number of symbols), numerology, an index of a common RB which overlaps with the first RB of the SSB, and an offset between the smallest RBs of CORESET#0 through the MIB. In addition, the base station may notify the terminal of configuration information on a monitoring period and an occasion for control resource set #0, that is, configuration information on search space #0, through the MIB.

According to the current standard, the minimum number of RBs which can be configured to be CORESET #0 is 24, and the minimum configurable subcarrier spacing is 15 kHz. Therefore, when 15 kHz is used as the subcarrier spacing, the minimum bandwidth of CORESET#0 may have 4.32 MHz (15 kHz * 12 * 25).

In consideration of the minimum bandwidth (3.6 MHz) of the SSB and the minimum bandwidth (4.32 MHz) of CORESET#0 described above, there is a problem in that a bandwidth (e.g., 3 MHz to 4 MHz, but the bandwidth is not limited thereto and may be a bandwidth lower than 3 MHz) lower than 4.32 MHz cannot be operated since the bandwidth is lower than the minimum bandwidth of the SSB or CORESET#0. Therefore, a solution is required to operate a service in a narrow bandwidth since networks currently being operated in a narrow bandwidth in a system such as LTE cannot be upgraded to an NR network.

In various embodiments of the disclosure, a subcarrier spacing lower than 15 kHz is newly defined, and when the subcarrier spacing is defined, a method of changing and configuring various parameters according to changes in a design of an SSB and a subcarrier spacing is provided.

In various embodiments of the disclosure, new subcarrier spacing supported by the mobile communication system may be added. The new subcarrier spacing may be a subcarrier spacing lower than 15 kHz, for example, 7.5 kHz ($\mu$=-1), 3.75 kHz ($\mu$=-2), etc. In the following, for convenience of description, the description is based on the subcarrier spacing of 7.5 kHz, but various embodiments of the disclosure can also be applied to various subcarrier spacings lower than 7.5 kHz.

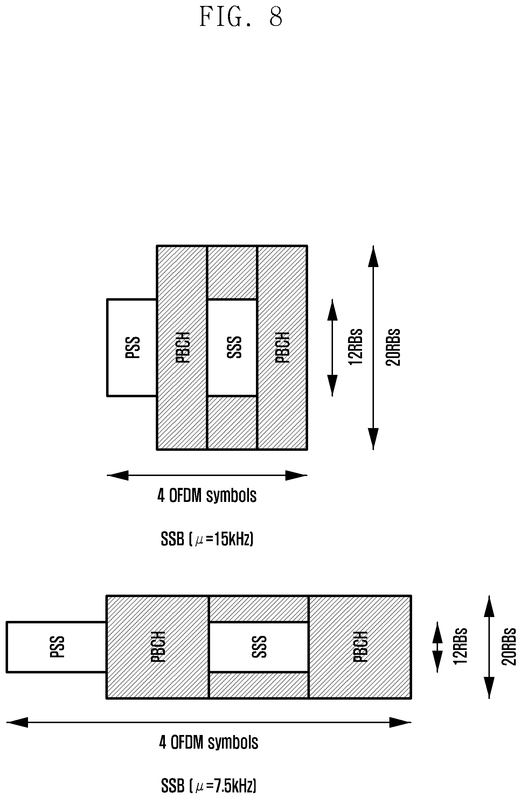

FIG. 8 is a diagram illustrating an SSB configuration according to a subcarrier spacing according to an embodiment of the disclosure.

The general configuration and content of an SSB are described with reference to the description of FIG. 7. Referring to FIG. 8, it may be noted that the size of a bandwidth of an SSB and the size of a symbol change when a subcarrier spacing is 15 kHz and when a subcarrier spacing is 7.5 kHz. That is, it may be noted that the number of RBs (20) which configure an SSB and the number of OFDM symbols (4) are the same, but since the spacing of subcarriers and the size of an OFDM symbol change, the size of the frequency axis of the SSB and the size of the time axis of the SSB change. Specifically, when the subcarrier spacing is reduced from 15 kHz to 7.5 kHz, the size of the frequency axis of the SSB is reduced by 1/2, and the size of the time axis of the SSB becomes twice as long.

The base station according to an embodiment of the disclosure may generate and transmit a channel and a signal with $\mu$ (subcarrier spacing) of 7.5 kHz. For example, the base station may generate a subcarrier spacing of a subcarrier used for transmission of each signal and channel included in an SSB (PSS, SSS, and PBCH) by configuring the same to be 7.5 kHz, and transmit the same. Accordingly, a bandwidth of the SSB may be 7.5 kHz * 12 * 20 = 1.8 MHz.

According to an embodiment of the disclosure, a subcarrier spacing for CORESET#0 may be configured according to a subcarrier spacing of the SSB. The base station may configure the subcarrier spacing of CORESET#0 to correspond to the subcarrier spacing of the SSB (the subcarrier spacing of the SSB and the subcarrier spacing of CORESET#0 may be the same). For example, if the subcarrier spacing of the SSB is 7.5 kHz, the base station may configure a resource of CORESET #0 to be 7.5 kHz, and transmit the configuration for CORESET #0 to the terminal. In addition, the base station may configure a subcarrier spacing of a subcarrier to which a PDCCH transmitted through CORESET #0 is mapped to be 7.5 kHz, generate control information, and transmit the information through the PDCCH. When the subcarrier spacing of 7.5 kHz is applied, the minimum bandwidth of CORESET#0 may be 7.5 kHz * 12 * 24 = 2.16 MHz. Information on the subcarrier spacing for CORESET #0 may be included in an MIB or PDCCH-ConfigSIB1 of the MIB, and transmitted. For example, the information on the subcarrier spacing may include at least one piece of information such as whether the subcarrier spacing of the SSB and the subcarrier spacing of CORESET #0 are the same (for example, indicate identity by using 1-bit information), and a multiple relationship (indicate multiple relationships such as 1/2, 1, 2, 4 times, etc. by using n-bit information).

The base station according to an embodiment of the disclosure may identify and obtain a frequency bandwidth of a frequency band to be operated by the base station. When the frequency bandwidth is less than or equal to a specific threshold or less than the specific threshold, the base station may generate and transmit a channel and a signal by using a subcarrier spacing (e.g., 7.5 kHz) lower than 15 kHz. In addition, the base station according to an embodiment of the disclosure may identify the frequency band to be operated by the base station. When the identified frequency band is a specific frequency band (e.g., band 8) or is lower than or equal to a preconfigured bandwidth (e.g., a band for supporting a bandwidth lower than or equal to 5 MHz), the base station may generate and transmit a channel and a signal by using a subcarrier spacing lower than 15 kHz. For example, the base station may generate an SSB, based on the determined subcarrier spacing, and generate a configuration for CORESET#0.

The terminal according to an embodiment of the disclosure may receive and process a channel and a signal transmitted using $\mu$ (subcarrier spacing) of 7.5 kHz. For example, the terminal may receive and process a channel and a signal under the assumption that a subcarrier spacing of a subcarrier used for transmission of each signal and channel included in an SSB (PSS, SSS, and PBCH) is 7.5 kHz. The terminal may determine a subcarrier spacing assumed for reception and processing of the SSB (PSS, SSS, and PBCH) depending on an operating frequency band and/or bandwidth. For example, if a frequency band that the terminal attempts to access corresponds to a specific frequency band (e.g., band 8) or a band which supports a bandwidth lower than or equal to a preconfigured bandwidth, the terminal may assume that a subcarrier spacing used in the corresponding band is 7.5 kHz, and assume that a subcarrier spacing of 15 kHz or greater is used in other frequency bands, and receive and process a signal, data, etc. in the corresponding band. For example, when the frequency band corresponds to a specific frequency band (e.g., band 8) or a band which supports a bandwidth lower than or equal to a preconfigured bandwidth, the terminal may receive an SSB by assuming that the subcarrier spacing of the SSB is 7.5 kHz (the subcarrier spacing is not limited to 7.5 kHz, and a subcarrier spacing lower than 7.5 kHz may be used), and when processing of the SSB is successful, the terminal may identify and obtain a resource of CORESET#0 by assuming that a subcarrier spacing of the CORESET#0 resource is 7.5 kHz (the subcarrier spacing is not limited to 7.5 kHz, and a subcarrier spacing lower than 7.5 kHz may be used). The subcarrier spacing of CORESET#0 may follow the subcarrier spacing of the SSB, and may also be determined based on information on the subcarrier spacing for CORESET#0 included in the MIB.

FIG. 9 is a diagram illustrating symbols to which one SS/PBCH block is mapped within a slot, according to an embodiment of the disclosure.

Referring to FIG. 9, an example of a conventional LTE system using a subcarrier spacing of 15 kHz and an NR system using a subcarrier spacing of 30 kHz is shown, and SS/PBCH blocks 911, 913, 915, and 917 of the NR system are designed to be transmitted at locations 901, 903, 905, and 907 where cell-specific reference signals (CRSs) always transmitted in the LTE system may be avoided. This may be to enable the LTE system and NR system to coexist in one frequency band.

FIG. 10 is a diagram illustrating a problem which occurs due to different subcarrier spacings in different communication systems according to an embodiment of the disclosure.

Referring to FIG. 10, in the case of using a subcarrier spacing of 15 kHz in LTE and the case of using a subcarrier (e.g., 7.5 kHz) lower than 15 kHz according to an embodiment of the disclosure, a problem in which an SSB and a CRS of the LTE overlap may be identified. A CRS transmitted in 0th, 1st, 4th, 7th, 8th, and 11th OFDM symbols of every subframe of an LTE carrier is transmitted. A CRS and an SSB do not overlap in the embodiment of FIG. 9, but when a small subcarrier spacing is used in the embodiment of FIG. 10, a problem in which a CRS and an SSB overlap in some symbols may occur.

According to an embodiment of the disclosure, in order to solve the above problem, in a symbol where the SSB and the CRS overlap, the SSB may not be mapped in a resource to which the CRS is mapped. The NR base station may puncture the resource to which the CRS is mapped, and map the SSB in a resource to which the CRS is not mapped. To this end, the LTE base station and the NR base station operating the corresponding band may provide each other with information on a resource through which the SSB is transmitted and a resource through which the CRS is transmitted, and this can be used to solve the problem of resource overlap.

In addition, according to an embodiment of the disclosure, in order to solve the above problem, the LTE base station may not transmit the CRS in a resource to which the SSB is mapped. Since the LTE base station does not transmit the CRS in a specific frequency band of a specific symbol, the problem in which the CRS and the SSB overlap can be solved. To this end, the LTE base station and the NR base station operating the corresponding band may provide each other with information on a resource through which the SSB is transmitted and a resource through which the CRS is transmitted, and this can be used to solve the problem in which an SSB resource and a CRS resource overlap.

In addition, in order to solve the above problem, the structure of the SSB may be partially adjusted. An embodiment of adjusting the structure of the SSB will be described with reference to FIG. 11.

FIG. 11 is a diagram illustrating a structure of a discontinuous SSB according to an embodiment of the disclosure.

Referring to FIG. 11, a PSS, a PBCH, and an SSS of an SSB are not mapped to continuous symbols, but may be configured to be mapped to discontinuous symbols within one slot. That is, referring to the SSB structure of FIG. 7, in the NR, the SSB is basically configured by four continuous OFDM symbols. However, as described in FIG. 10, in order to solve a problem which occurs due to a change in a subcarrier spacing, the SSB may be configured to be mapped to discontinuous symbols rather than continuous symbols. In the embodiment of FIG. 11, a mapping order in an OFDM symbol has been maintained as a PSS, a PBCH, an SSS, and a PBCH, but in the case of configuring a discontinuous SSB, the structure of the SSB is not limited thereto, and the SSB may also be configured by changing a mapping order of a PSS, an SSS, and a PBCH.

FIG. 12 is a diagram illustrating a symbol through which an SS/PBCH block can be transmitted according to a subcarrier spacing, according to an embodiment of the disclosure.

Referring to FIG. 12, a subcarrier spacing may be configured as 15 kHz, 30 kHz, 120 kHz, 240 kHz, etc., and a location of a symbol where an SS/PBCH block (or SSB block) may be located may be determined according to each subcarrier spacing. FIG. 12 illustrates a location of a symbol through which an SSB can be transmitted according to a subcarrier spacing in symbols within 1 ms, and an SSB is not always required to be transmitted in an area shown in FIG. 12. Accordingly, a location where the SSB block is transmitted may be configured for the terminal through system information or dedicated signaling.

FIG. 13 is another diagram illustrating a symbol through which an SS/PBCH block can be transmitted according to a subcarrier spacing, according to an embodiment of the disclosure.

Each of at least one SSB(s) transmitted during one half frame (5 msec) through the 5G communication system may have an index of 0 to $L_{max}$-1 in an ascending order. $L_{max}$ refers to the maximum number of SSBs which can be transmitted, and this may be defined for each band (band-specific). For example, $L_{max}$ may be equal to 4 in a band less than or equal to 3 GHz, 8 in a 3 to 6 GHz band, and 64 in a band equal to or greater than 6 GHz.

Referring to FIG. 13, a subcarrier spacing may be configured as 15 kHz, 30 kHz, 120 kHz, 240 kHz, etc., and a location of a symbol where an SS/PBCH block (or SSB block) may be located may be determined according to each subcarrier spacing. FIG. 13 illustrates a location of a symbol through which an SSB block can be transmitted according to a subcarrier spacing in symbols within 5 ms, and further, a location where the SSB block is transmitted may be configured for the terminal through system information or dedicated signaling. In an area where the SS/PBCH block can be transmitted, the SS/PBCH block is not always required to be transmitted, and may be or may not be transmitted depending on the selection of the base station. Accordingly, the location where the SSB block is transmitted may be configured for the terminal through system information or dedicated signaling.

According to various embodiments of the disclosure, when a subcarrier spacing lower than 15 kHz is used, for example, when 7.5 kHz is used as a subcarrier spacing of an SSB, if the same number of $L_{max}$ is used, the ratio of symbols occupied by the SSB within a half frame increases by two times compared to the case of 15 kHz. In this case, this may be a problem since most of the half frame is used for SSB transmission.

Therefore, according to an embodiment of the disclosure, when a subcarrier spacing lower than 15 kHz is used, an $L_{max}$ value may be configured to have a value smaller than 4. For example, a value of 1 or 2 may be used as the $L_{max}$ value. In this case (when a subcarrier spacing lower than 15 kHz is used, for example, 7.5 kHz is used), the maximum number of SSBs which can be transmitted within a half frame may be 1 or 2.

According to an embodiment of the disclosure, the $L_{max}$ value may be determined based on a frequency band and/or a bandwidth of a carrier. For example, when the bandwidth of the carrier is lower than a preconfigured threshold value (e.g., lower than 5 MHz, lower than 4 MHz, etc.), 1 or 2 may be used as the $L_{max}$ value. In addition, when the frequency band is a preconfigured band (e.g., band 8 or a band using a bandwidth lower than or equal to a preconfigured bandwidth), 1 or 2 may be used as the $L_{max}$ value.

The base station and/or the terminal may determine and use an $L_{max}$ value appropriate for a subcarrier spacing by using the method described above.

Next, a time axis mapping period of an SSB according to various embodiments of the disclosure will be described.

The terminal in the 5G communication system may operate under the assumption that SSB transmission has a period of 2 frames (20 msec) in an initial cell selection process. Further, after initial access, the base station may provide the terminal with a period of an SSB transmitted from a serving cell through upper layer signaling (e.g., RRC signaling, MAC CE, etc.). Table 4 below shows information included in a ServingCellConfigCommon Information Element (IE). The period of the SSB may be provided to the terminal through a value of ssb-periodicityServingCell included in the ServingCellConfigCommon IE. If the ssb-periodicityServingCell parameter is not included in the IE, the terminal may understand/assume a value of ms5 (5 msec).

[Table 4]

```
ServingCellConfigCommon ::=          SEQUENCE {
    physCellId                       PhysCellId
OPTIONAL,    -- Cond HOAndServCellAdd,
    downlinkConfigCommon
DownlinkConfigCommon
OPTIONAL,    -- Cond HOAndServCellAdd
    uplinkConfigCommon                  UplinkConfigCommon
OPTIONAL,    -- Need M
    supplementaryUplinkConfig        UplinkConfigCommon
OPTIONAL,    -- Need S
    n-TimingAdvanceOffset            ENUMERATED { n0,
n25600, n39936 }                            OPTIONAL,
-- Need S
    ssb-PositionsInBurst             CHOICE {
        shortBitmap                      BIT STRING (SIZE
(4)),
        mediumBitmap                     BIT STRING (SIZE
(8)),
        longBitmap                       BIT STRING (SIZE
(64))
    }
OPTIONAL, -- Cond AbsFreqSSB
```

```
        ssb-periodicityServingCell              ENUMERATED { ms5,
ms10, ms20, ms40, ms80, ms160, spare2, spare1 }      OPTIONAL, -
- Need S
        dmrs-TypeA-Position                     ENUMERATED {pos2,
pos3},
        lte-CRS-ToMatchAround                   SetupRelease {
RateMatchPatternLTE-CRS }
OPTIONAL, -- Need M
        rateMatchPatternToAddModList            SEQUENCE (SIZE
(1..maxNrofRateMatchPatterns)) OF RateMatchPattern
OPTIONAL, -- Need N
        rateMatchPatternToReleaseList           SEQUENCE (SIZE
(1..maxNrofRateMatchPatterns)) OF RateMatchPatternId
OPTIONAL, -- Need N
        ssbSubcarrierSpacing                    SubcarrierSpacing
OPTIONAL, -- Cond HOAndServCellWithSSB
        tdd-UL-DL-ConfigurationCommon           TDD-UL-DL-
ConfigCommon
OPTIONAL, -- Cond TDD
        ss-PBCH-BlockPower                      INTEGER (-60..50),
        ...,
        [[
        channelAccessMode-r16                   CHOICE {
            dynamic                             NULL,
            semiStatic
SemiStaticChannelAccessConfig-r16
        }
OPTIONAL, -- Cond SharedSpectrum
        discoveryBurstWindowLength-r16          ENUMERATED
{ms0dot5, ms1, ms2, ms3, ms4, ms5}
OPTIONAL, -- Need R
```

| | |
|---|---|
| ssb-PositionQCL-r16<br>Relation-r16<br>Cond SharedSpectrum<br>highSpeedConfig-r16<br>r16<br>Need R<br>    ]]<br>} | SSB-PositionQCL-<br>OPTIONAL, --<br><br>HighSpeedConfig-<br>OPTIONAL  -- |

Similarly, the period of the SSB may be provided to the terminal through a value of ssb-PeriodicityServingCell included in a ServingCellConfigCommonSIB IE. Table 5 shows information included in the ServingCellConfigCommonSIB IE.

['Table 5]

| | |
|---|---|
| ServingCellConfigCommonSIB ::=<br>    downlinkConfigCommon<br>DownlinkConfigCommonSIB,<br>    uplinkConfigCommon<br>UplinkConfigCommonSIB<br>OPTIONAL, -- Need R<br>    supplementaryUplink<br>OPTIONAL, -- Need R<br>    n-TimingAdvanceOffset<br>n25600, n39936 }<br>    ssb-PositionsInBurst<br>      inOneGroup<br>(8)),<br>      groupPresence<br>OPTIONAL  -- Cond FR2-Only<br>    },<br>    ssb-PeriodicityServingCell<br>ms20, ms40, ms80, ms160}, | SEQUENCE {<br><br><br><br><br><br><br>UplinkConfigCommonSIB<br><br>ENUMERATED { n0,<br>OPTIONAL, -- Need S<br>SEQUENCE {<br>BIT STRING (SIZE<br><br>BIT STRING (SIZE (8))<br><br><br>ENUMERATED {ms5, ms10, |

```
        tdd-UL-DL-ConfigurationCommon          TDD-UL-DL-
ConfigCommon                                   OPTIONAL, --
Cond TDD
        ss-PBCH-BlockPower                      INTEGER (-60..50),

...,
[[
        channelAccessMode-r16                   CHOICE {
            dynamic                             NULL,
            semiStatic
SemiStaticChannelAccessConfig-r16
        }
OPTIONAL, -- Cond SharedSpectrum
        discoveryBurstWindowLength-r16          ENUMERATED
{ms0dot5, ms1, ms2, ms3, ms4, ms5}             OPTIONAL, --
Need R
        highSpeedConfig-r16                     HighSpeedConfig-r16
OPTIONAL   -- Need R
        ]]
}
```

The minimum period value of an SSB which may be configured through the ssb-PeriodicityServingCell is 5 msec, but in the case where $\mu$ = 7.5 kHz, if the SSB is transmitted at a period of 5 msec, a problem in which a lot of time resources are allocated to the SSB may occur. (If $L_{max}$=4, the SSB occupies 4msec.)

Accordingly, according to an embodiment of the disclosure, as the minimum value of an SSB transmission period configured and transmitted by the base station (ServingCellConfigCommon and ServingCellConfigCommonSIB), some values (e.g., ms5) may not be allowed when a subcarrier spacing used in the SSB is 7.5 kHz or lower. That is, when the subcarrier spacing of the SSB according to an embodiment of the disclosure is 7.5 kHz (or a value lower than 7.5 kHz), the base station may perform transmission by configuring an SSB transmission period to one of values (e.g., ms10, ms20, ms40, ms80, and ms160) excluding some values (e.g., ms5) from the existing values. That is, the minimum transmission period of SSB which can be configured may be 10 ms or a value greater than 10 ms. When ssb-periodicityServingCell (or ssb-PeriodicityServingCell) is omitted, a default value may be 10 ms or a value greater than 10 ms.

According to an embodiment of the disclosure, the terminal having received the ServingCellConfigCommon (or ServingCellConfigCommonSIB) IE without the ssb-periodicityServingCell (or ssb-PeriodicityServingCell) parameter may understand/assume that the period of the SSB is a specific value when the subcarrier spacing used in the SSB is 7.5 kHz or a value lower than 7.5 kHz. The specific value may be determined as the minimum value (e.g., ms10) among the remaining values obtained by excluding some values (e.g., ms5) excluded in the above embodiment. For example, the specific value may be configured to be 10 ms or a value greater than 10 ms.

In addition, the terminal according to an embodiment of the disclosure may operate under the assumption that an SSB transmission period at the time of initial access is a longer period (e.g., 40 msec and 4 frames) rather than 2 frames when the subcarrier spacing used in the SSB is 7.5 kHz or lower.

Next, timing-related parameters according to various embodiments of the disclosure are defined. When a subcarrier spacing lower than 15 kHz is used according to various embodiments of the disclosure, timing-related parameters may be required to be changed to support the subcarrier spacing.

In the 5G communication system, a time required for processing of each of various channels is defined. The time required for the processing is defined for each channel depending on the terminal's capability and numerology (subcarrier spacing $\mu$).

A time ($N_2$) required for preparation of a physical uplink shared channel (PUSCH) may be defined for each the terminal's capability and numerology (subcarrier spacing $\mu$) as shown in Table 6 (the case of Table 1 PUSCH preparation time for PUSCH timing capability 1) and Table 7 (the case of Table 2 PUSCH preparation time for PUSCH timing capability 2) below.

[Table 6]

| $\mu$ | PUSCH preparation time $N_2$ [symbols] |
|---|---|
| 0 | 10 |

[Table 7]

| 1 | 12 |
|---|---|
| 2 | 23 |
| 3 | 36 |

Although not shown in Tables 6 and 7 above, when a subcarrier spacing lower than 15 kHz is used, an additional $N_2$ value may be used as a value lower than or equal to a preconfigured value. For example, a value lower than or equal to 15 kHz may be used. According to an embodiment of the disclosure, in the case where $\mu$ = 7.5 kHz ($\mu$ = -1), a PUSCH preparation time ($N_2$) for PUSCH timing capability 1 may be determined as one of values included in [$N_{2,min,cap1}$, 10], one of values included in [$N_{2,min,cap1}$ , 10), one of values included in ($N_{2,min,cap1}$ , 10], or one of values included in ($N_{2,min,cap1}$ , 10). In addition, according to an embodiment of the disclosure, in the case where $\mu$ = 7.5 kHz ($\mu$ = -1), a PUSCH preparation time ($N_2$) for PUSCH timing capability 2 may be determined as one of values included in [$N_{2,min,cap2}$ , 5], one of values included in [$N_{2,min,cap2}$ , 5), one of values included in ($N_{2,min,cap2}$ , 5], or one of values included in ($N_{2,min,cap2}$ , 5).

The terminal and/or base station may process a PUSCH by using the PUSCH preparation time determined as above.

A time ($N_1$) required for a processing procedure of a physical downlink shared channel (PDSCH) is defined for each the terminal's capability and numerology (subcarrier spacing $\mu$) as shown in Table 8 (the case of PDSCH processing time for PDSCH processing capability 1) and Table 9 (the case of PDSCH processing time for PDSCH processing capability 2).

[Table 8]

| $\mu$ | PDSCH decoding time $N_1$ [symbols] | |
|---|---|---|
| | *dmrs-AdditionalPosition = 'posO' in DMRS-DownlinkConfig in both of dmrs-DownlinkForPDSCH-MappingTypeA, dmrs-DownlinkForPDSCH-MappingTypeB* | *dmrs-AdditionalPosition ≠ 'pos0' in DMRS-DownlinkConfig in either of dmrs-DownlinkForPDSCH-MappingTypeA, dmrs-DownlinkForPDSCH-MappingTypeB or if the higher layer parameter is not configured* |
| 0 | 8 | $N_{1,0}$ |
| 1 | 10 | 13 |
| 2 | 17 | 20 |
| 3 | 20 | 24 |

[Table 9]

| $\mu$ | PDSCH decoding time $N_1$ [symbols] |
|---|---|
| | dmrs-AdditionalPosition = 'pos0' in DMRS-DownlinkConfig in both of dmrs-DownlinkForPDSCH-MappingTypeA, dmrs-DownlinkForPDSCH-MappingTypeB |
| 0 | 3 |
| 1 | 4.5 |
| 2 | 9 for frequency range 1 |

Although not shown in Tables 8 and 9 above, when a subcarrier spacing lower than 15 kHz is used, an additional $N_1$ value may be used as a value lower than or equal to a preconfigured value. For example, a value lower than or equal to 15 kHz may be used. According to an embodiment of the disclosure, in the case where $\mu$ = 7.5 kHz ($\mu$ = -1), a PDSCH processing time ($N_1$) for PDSCH processing capability 1 may be determined as one of values included in [$N_{1,min,cap1}$, 8], one of values included in [$N_{1,min,cap1}$, 8), one of values included in ($N_{1,min,cap1}$, 8], or one of values included in ($N_{1,min,cap1}$, 8). According to an embodiment of the disclosure, in the case where $\mu$ = 7.5 kHz ($\mu$ = -1), a PDSCH processing time ($N_1$) for PDSCH processing capability 2 may be determined as one of values included in [$N_{1,min,cap2}$, 3], one of values included in [$N_{1,min,cap2}$, 3), one of values included in ($N_{1,min,cap2}$, 3], or one of values included in ($N_{1,min,cap2}$, 3).

The terminal and/or base station may process a PDCCH by using the PDCCH processing time determined as above.

A physical downlink control channel (PDCCH) and a PDSCH have different numerologies (subcarrier spacing $\mu$), and a PDSCH reception preparation time ($N_{pdsch}$) in the case where a carrier through which the PDCCH is transmitted and a carrier through which the PDSCH is transmitted are different (that is, cross-carrier scheduling) is defined for each numerology (subcarrier spacing $\mu$) as shown in Table 10 ($N_{pdsch}$ as a function of the subcarrier spacing of the scheduling PDCCH).

[Table 10]

| $\mu_{PDCCH}$ | $N_{pdsch}$ [symbols] |
|---|---|
| 0 | 4 |
| 1 | 5 |
| 2 | 10 |
| 3 | 14 |

Although not shown in Table 10 above, when a subcarrier spacing lower than 15 kHz is used, an additional $N_{PDSCH}$ value may be used as a value lower than or equal to a preconfigured value. For example, a value lower than or equal to 15 kHz may be used. According to an embodiment of the disclosure, the physical downlink control channel (PDCCH) and the PDSCH have different numerologies (subcarrier spacing $\mu$=7.5 kHz, $\mu$=-1), and the PDSCH reception preparation time ($N_{pdsch}$) in the case where the carrier through which the PDCCH is transmitted and the carrier through which the PDSCH is transmitted are different (that is, cross-carrier scheduling) may be determined as one of values included in [$N_{pdsch,min}$, 4], one of values included in [$N_{pdsch,min}$, 4), one of values included in ($N_{pdsch,min}$, 4], or one of values included in ($N_{pdsch,min}$, 4).

As such, according to various embodiments of the disclosure, a new subcarrier spacing is used (e.g., $\mu$ = 7.5 kHz ($\mu$ = -1)), and thus timing-related parameters ($N_2$, $N_1$, $N_{pdsch}$) may be newly defined, and the newly defined values may be less than or equal to the corresponding values ($N_2$, Ni, $N_{pdsch}$) in the case where the subcarrier spacing is 15 kHz ($\mu$=0), respectively, and may have a rational number greater than a specific value (the specific value is greater than 0).

In addition, according to various embodiments of the disclosure, new values may be defined for various parameters defined in Table 11 according to the use of a new subcarrier spacing. (The description is based on 7.5 kHz, but the disclosure is not limited thereto.)

[Table 11]

| |
|---|
| - The number of MIMO layers: The (maximum) number of MIMO layers to be supported (or supportable) by a carrier which supports 7.5 kHz ($\mu$ = -1) |

(continued)

- MCS: MCS (maximum value) to be supported (or supportable) by a carrier which supports 7.5 kHz ($\mu$ = -1)
- The maximum value of transport block size (TBS)
- The number of subcarriers: The maximum number of subcarriers in a carrier which supports 7.5 kHz ($\mu$ = -1)
- Whether to use the same (different) numerology between a PDCCH and a PDSCH/PUSCH (different BWP and different carrier)
- The number of blind decoding: Blind decoding configuration in a carrier which supports 7.5 kHz ($\mu$ = -1) (the maximum number of blind decoding and the maximum number of blind decoding which can be configured)
- DMRS configuration (whether to configure front loaded DMRS and additional DMRS)
- peak data rate
- RE-mapping
- Scheduling method (14-symbol slot-based scheduling)

FIG. 14 is a diagram illustrating an operation of a terminal according to various embodiments of the disclosure.

In operation 1410, the terminal may identify whether a band that the terminal itself attempts to access is a preconfigured band, or whether the size of a frequency band that the terminal itself attempts to access is smaller than a preconfigured bandwidth. For example, the terminal may identify whether the preconfigured band is a specific band (e.g., band 8) using a narrow bandwidth or whether the preconfigured bandwidth (e.g., a bandwidth lower than 5 MHz) is used. Alternatively, depending on the terminal configuration or the terminal type, when the terminal is a terminal configured to access only a preconfigured band or a terminal configured to use a bandwidth narrower than a preconfigured bandwidth, the terminal may determine that a condition for operation 1410 is satisfied.

When it is determined in operation 1410 that the preconfigured band or the bandwidth narrower than the preconfigured bandwidth is used, in operation 1420, the terminal may determine that an SCS smaller than a preconfigured SCS is required to be used in the corresponding band. For example, the preconfigured SCS may be 15 kHz, and the SCS lower than 15 kHz may be 7.5 kHz, 3.75 kHz, etc.

In operation 1430, the terminal may obtain or detect an SSB by assuming that the SSB transmitted by the base station is generated and transmitted in consideration of the SCS smaller than the preconfigured SCS. A specific configuration of the SSB refers to a configuration of the SSB according to various embodiments of the disclosure. In addition, the terminal may receive a configuration of a resource for CORESET#0 by using the SCS smaller than the preconfigured SCS, and identify the resource.

In operation 1440, the terminal may communicate with a base station. The terminal may control transmission and reception of a data channel by applying a processing time considering an SCS of a frequency band in which the terminal itself operates. A specific example of the processing time refers to a configuration of a processing time according to various embodiments of the disclosure.

FIG. 15 is a diagram illustrating an operation of a base station according to various embodiments of the disclosure.

In operation 1510, the base station may identify whether a band that the base station itself attempts to operate is a preconfigured band, or whether the size of a frequency band that the base station itself attempts to operate is smaller than a preconfigured bandwidth. For example, the base station may identify whether the preconfigured band is a specific band (e.g., band 8) using a narrow bandwidth or whether the preconfigured bandwidth (e.g., a bandwidth lower than 5 MHz) is used.

When it is determined in operation 1510 that the preconfigured band or a bandwidth narrower than the preconfigured bandwidth is used, in operation 1520, the base station may determine that an SCS smaller than a preconfigured SCS is required to be used in the corresponding band. For example, the preconfigured SCS may be 15 kHz, and the SCS lower than 15 kHz may be 7.5 kHz, 3.75 kHz, etc.

In operation 1530, the base station may generate and transmit an SSB. The base station may generate or configure an SSB for the SCS smaller than the preconfigured SCS. A specific configuration of the SSB refers to a configuration of the SSB according to various embodiments of the disclosure. In addition, the base station may configure a configuration for CORESET#0 by using the SCS smaller than the preconfigured SCS.

In operation 1540, the base station may communicate with at least one terminal. The base station may control transmission and reception of a data channel by applying a processing time considering an SCS of a frequency band that the base station itself is operating. A specific example of the processing time refers to a configuration of a processing time according to various embodiments of the disclosure.

According to an embodiment of the disclosure, in the case of a specific frequency band and/or a specific frequency bandwidth (e.g., a band for supporting a bandwidth lower than or equal to 5 MHz), only a subcarrier spacing (SCS) of 15 kHz may be allowed to be used for an SSB. Since a PSS and an SSS of the SSB have 15 kHz * 12 * 12 = 2. 16MHz and a PBCH has 15 kHz * 12 * 20 = 3.6MHz, at least some resources used in the PBCH may be punctured. For example, resources belonging to at least three or more RBs may be punctured.

According to an embodiment of the disclosure, in the case of a specific frequency band and/or a specific frequency bandwidth (e.g., a band for supporting a bandwidth lower than or equal to 5 MHz), only a subcarrier spacing (SCS) of 15 kHz may be allowed to be used for a PDCCH transmitted through an SSB and CORESET #0. CORESET#0 has 24 RBs, 48 RBs, or 96 RBs, corresponding to 4.32 MHz, 8.64 MHz, and 17.28 MHz, respectively, and thus at least some resources used in CORESET#0 may be punctured. CORESET has 6 RBs as the basic resource unit, so that resources belonging to 6*M (M is a natural number) RBs may be punctured accordingly. An indication of whether to puncture a resource may be broadcasted and delivered to the terminal.

According to an embodiment of the disclosure, the base station operating in a specific frequency band and/or a specific frequency bandwidth (e.g., a band for supporting a bandwidth lower than or equal to 5 MHz) may puncture and transmit some resources of the PBCH and/or some resources of CORESET#0.

According to an embodiment of the disclosure, the terminal operating in a specific frequency band and/or a specific frequency bandwidth (e.g., a band for supporting a bandwidth lower than or equal to 5 MHz) may understand that some resources of the PBCH and/or some resources of CORESET#0 are punctured, and process a signal.

According to an embodiment of the disclosure, resources used for transmission of the PSS, SSS, PBCH, and a DMRS of the PBCH in a specific frequency band and/or a specific frequency bandwidth (e.g., a band for supporting a bandwidth lower than or equal to 5 MHz) may be as shown in Table 12. In Table 12, resources belonging to [0, $k_{puncture,1}$-1] and resources belonging to [$k_{pucture,2}$,239] may be punctured, and resources belonging to [$k_{puncture,1}$, $k_{puncture,2}$-1] may not be punctured. A value of $k_{puncture,1}$ may correspond to one of natural numbers of [24, 55], and a value of $k_{puncture,2}$ may correspond to one of natural numbers of [183, 216]. A value of $k_{puncture,1}$ may correspond to one of natural numbers of [30, 55], and a value of $k_{puncture,2}$ may correspond to one of natural numbers of [183, 210]. A value of $k_{puncture,1}$ may correspond to one of natural numbers of [36, 55], and a value of $k_{puncture,2}$ may correspond to one of natural numbers of [183, 204]. The amounts of resources belonging to [0, $k_{puncture,1}$-1] and resources belonging to [$k_{pucture,2}$,239] may be the same or different.

[Table 12]

| Channel or signal | OFDM symbol number *l* relative to the start of an SS/PBCH block | Subcarrier number *k* relative to the start of an SS/PBCH block |
|---|---|---|
| PSS | 0 | 56, 57, ..., 182 |
| SSS | 2 | 56, 57, ..., 182 |
| Set to 0 | 0 | 0, 1, ..., 55, 183, 184, ..., 239<br>0, 1, ..., $k_{puncture,1}$-1 : puncture<br>$k_{pucture,2}$, ..., 239 : puncture |
| | 2 | 48, 49, ..., 55, 183, 184, ..., 191<br>0, 1, ..., $k_{puncture,1}$-1 : puncture<br>$k_{pucture,2}$, ..., 239 : puncture |
| PBCH | 1, 3 | 0, 1, ..., 239<br>0, 1, ..., $k_{puncture,1}$-1 : puncture<br>$k_{pucture,2}$, ..., 239 : puncture |
| | 2 | 0, 1, ..., 47,<br>192, 193, ..., 239<br>0, 1, ..., $k_{puncture,1}$-1 : puncture<br>$k_{pucture,2}$, ..., 239 : puncture |
| DM-RS for PBCH | 1, 3 | 0+*v*,4+*v*,8+*v*,...,236+*v*<br>0, 1, ..., $k_{puncture,1}$-1 : puncture<br>$k_{pucture,2}$, ..., 239 : puncture |
| | 2 | 0+*v*,4+*v*,8+*v*,...,44+*v* 192+*v*,196+*v*,...,236+*v*<br>0, 1, ..., $k_{puncture,1}$-1 : puncture<br>$k_{pucture,2}$, ..., 239 : puncture |

According to an embodiment of the disclosure, in the case of a specific frequency band and/or a specific frequency bandwidth (e.g., a band for supporting a bandwidth lower than or equal to 5 MHz), only a subcarrier spacing (SCS) of 15 kHz may be allowed to be used for an SSB. A PSS and an SSS of the SSB may have 15 kHz * 12 * 12 = 2.16 MHz. The number of RBs allocated to a PBCH may be X (e.g., 17, 16, 15, 14, 13 or 12), and the PBCH may be transmitted by being mapped to the RB resources allocated for the PBCH. Accordingly, the PBCH may have a bandwidth of 15 kHz * 12 * X(12~17) = 2.16 MHz to 3.06 MHz.

According to an embodiment of the disclosure, in the case of a specific frequency band and/or a specific frequency bandwidth (e.g., a band for supporting a bandwidth lower than or equal to 5 MHz), a part of the PBCH may be mapped and transmitted even in a symbol through which the PSS is transmitted. In this case, several REs between the PBCH and the PSS may be configured to be 0. (That is, nothing may be mapped.)

According to an embodiment of the disclosure, the base station operating in a specific frequency band and/or a specific frequency bandwidth (e.g., a band for supporting a bandwidth lower than or equal to 5 MHz) may perform transmission by using resources corresponding to X (<20) RBs allocated for the PBCH.

According to an embodiment of the disclosure, the terminal operating in a specific frequency band and/or a specific frequency bandwidth (e.g., a band for supporting a bandwidth lower than or equal to 5 MHz) may receive and process a signal from X (<20) RBs allocated to the PBCH.

According to an embodiment of the disclosure, an MIB transmitted through the PBCH may include SystemFrameNumber (6 bits, indicates 6 MSBs among 10 bits of System Frame Number), subCarrierSpacingCommon (1 bit, SIB1, MSG 2/4, paging, indicates a subcarrier spacing for a broadcasted SIB), ssb-SubcarrierOffset (4 bits, corresponds to kSSB and indicates an offset between the SSB and the overall resource block grid by the number of subcarriers), dmrs-TypeA-Position (1 bit, indicates locations of a downlink and an uplink DMRS), pdcch-ConfigSIB 1 (8 bits, indicates CORESET#0 and SearchSpace#0 configurations), cellBarred (1 bit, indicates whether camping to a corresponding cell is allowed), intraFreqReselection (1 bit, indicates whether another cell in the same frequency band can be selected in a cell reselection operation of the terminal), and spare(1 bit, unused).

According to an embodiment of the disclosure, a new CORESET#0 configuration may be indicated by using at least one of unused indexes (Reserved) among indexes (0 to 15) indicating the configuration of CORESET#0.

According to an embodiment of the disclosure, CORESET#0 for a specific frequency band and/or a specific frequency bandwidth (for example, a band for supporting a bandwidth lower than or equal to 5 MHz) may correspond to at least some of the following combinations. CORESET#0 may have 12 RBs ($N_{RB}^{CORESET}$) and 4 symbols ($N_{symb}^{CORESET}$). CORESET#0 may have 12 RBs ($N_{RB}^{CORESET}$) and 6 symbols ($N_{symb}^{CORESET}$). CORESET#0 may have 18 RBs ($N_{RB}^{CORESET}$) and 3 symbols ($N_{symb}^{CORESET}$). CORESET#0 may have 18 RBs ($N_{RB}^{CORESET}$) and 4 symbols ($N_{symb}^{CORESET}$).

According to an embodiment of the disclosure, when there is one combination including CORESET#0 for a specific frequency band and/or a specific frequency bandwidth (e.g., a band for supporting a bandwidth lower than or equal to 5 MHz), the corresponding combination may be indicated by using one of the unused indexes (Reserved) among the indexes (0 to 15) indicating the configuration of CORESET#0. In this case, index 15 of CORESET#0 included in pdcch-ConfigSIB 1 included in the MIB may be used. Table 13 shows the above combination.

[Table 13]

| CORESET RB and symbol configuration for Type0-PDCCH search space set |
| --- |

| Set of resource blocks and slot symbols of CORESET for Type0-PDCCH search space set when {SS/PBCH block, PDCCH} SCS is {15, 15} kHz for frequency bands with minimum channel bandwidth 5 MHz or 10 MHz | | | | |
|---|---|---|---|---|
| Index | SS/PBCH block and CORESET multiplexing pattern | Number of RBs $N_{RB}^{CORESET}$ | Number of Symbols $N_{symb}^{CORESE}$ | Offset (RBs) |
| 0 | 1 | 24 | 2 | 0 |
| 1 | 1 | 24 | 2 | 2 |
| 2 | 1 | 24 | 2 | 4 |
| 3 | 1 | 24 | 3 | 0 |
| 4 | 1 | 24 | 3 | 2 |
| 5 | 1 | 24 | 3 | 4 |
| 6 | 1 | 48 | 1 | 12 |
| 7 | 1 | 48 | 1 | 16 |
| 8 | 1 | 48 | 2 | 12 |
| 9 | 1 | 48 | 2 | 16 |
| 10 | 1 | 48 | 3 | 12 |
| 11 | 1 | 48 | 3 | 16 |
| 12 | 1 | 96 | 1 | 38 |
| 13 | 1 | 96 | 2 | 38 |
| 14 | 1 | 96 | 3 | 38 |
| 15 | One CORESET#0 configuration combination for a specific frequency band and/or a specific frequency bandwidth (e.g., a band for supporting a bandwidth lower than or equal to 5 MHz) | | | |

According to an embodiment of the disclosure, when there are two or more combinations included in CORESET #0 for a specific frequency band and/or a specific frequency bandwidth (e.g., a band for supporting a bandwidth lower than or equal to 5 MHz), a new table indicating the above combinations may be defined. Table 14 shows the above combinations. Spare (reserved bit) 1 bit in the MIB may be used to indicate whether the new table (e.g., Table 14) or the existing table is indicated. When the 1-bit value is 0, the existing table may be indicated, and when the 1-bit value is 1, the new table (e.g., Table 14) may be indicated, or vice versa.

[Table 14]

| CORESET RB and symbol configuration for Type0-PDCCH search space set<br><br>Set of resource blocks and slot symbols of CORESET for Type0-PDCCH search space set when {SS/PBCH block, PDCCH} SCS is {15, 15} kHz for frequency bands with minimum channel bandwidth 5 MHz or 10 MHz | | | | |
|---|---|---|---|---|
| **Index** | **SS/PBCH block and CORESET multiplexing pattern** | **Number of RBs** $N_{RB}^{CORESET}$ | **Number of Symbols** $N_{symb}^{CORESE}$ | **Offset (RBs)** |
| 0 | CORESET#0 configuration combination 1 for a specific frequency band and/or a specific frequency bandwidth (e.g., a band for supporting a bandwidth lower than or equal to 5 MHz) | | | |
| 1 | CORESET#0 configuration combination 2 for a specific frequency band and/or a specific frequency bandwidth (e.g., a band for supporting a bandwidth lower than or equal to 5 MHz) | | | |
| ... | ... | | | |
| $2^N$-1 | Reserved | | | |

According to an embodiment of the disclosure, pdcch-ConfigSIB 1 included in the MIB transmitted through the PBCH for a specific frequency band and/or a specific frequency bandwidth (e.g., a band for supporting a bandwidth lower than or equal to 5 MHz) may be configured by N bits less than 8 bits.

According to an embodiment of the disclosure, the MIB transmitted through the PBCH for a specific frequency band and/or a specific frequency bandwidth (e.g., a band for supporting a bandwidth lower than or equal to 5 MHz) may not include a subCarrierSpacingCommon parameter.

According to an embodiment of the disclosure, the MIB transmitted through the PBCH for a specific frequency band and/or a specific frequency bandwidth (e.g., a band for supporting a bandwidth lower than or equal to 5 MHz) may include an indicator (1 bit) indicating whether the transmitted MIB is the existing MIB or a newly defined MIB.

According to an embodiment of the disclosure, the MIB transmitted through the PBCH for a specific frequency band and/or a specific frequency bandwidth (e.g., a band for supporting a bandwidth lower than or equal to 5 MHz) may include at least some of: SystemFrameNumber (6 bits, indicates 6 MSBs among 10 bits of System Frame Number), subCarrierSpacingCommon (1 bit, SIB1, MSG 2/4, paging, indicates a subcarrier spacing for a broadcasted SIB), ssb-SubcarrierOffset (4 bits, corresponds to kSSB and indicates an offset between the SSB and the overall resource block grid by the number of subcarriers), dmrs-TypeA-Position (1 bit, indicates locations of a downlink and an uplink DMRS), pdcch-ConfigSIB1 (8 bits, indicates CORESET#0 and SearchSpace#0 configurations), cellBarred (1 bit, indicates whether camping to a corresponding cell is allowed), intraFreqReselection (1 bit, indicates whether another cell in the same frequency band can be selected in a cell reselection operation of the terminal), and spare(1 bit, unused).

According to an embodiment of the disclosure, $N_{RB}$ which is the number of RBs configuring a carrier may be determined by a spectrum utilization and a subcarrier spacing.

When a subcarrier spacing of 7.5 kHz is used in a 3MHz bandwidth, $N_{RB}$ included in a carrier may be 26 (spectrum utilization: 80%), 30 (spectrum utilization: 90%), or 31 (spectrum utilization: 95%).

When a subcarrier spacing of 15 kHz is used in a 3MHz bandwidth, $N_{RB}$ included in a carrier may be 13 (spectrum utilization: 80%), 15 (spectrum utilization: 90%), or 15 (spectrum utilization: 95%).

When a subcarrier spacing of 7.5 kHz is used in a 4MHz bandwidth, $N_{RB}$ included in a carrier may be 35 (spectrum utilization: 80%), 40 (spectrum utilization: 90%), or 42 (spectrum utilization: 95%).

When a subcarrier spacing of 15 kHz is used in a 4MHz bandwidth, $N_{RB}$ included in a carrier may be 17 (spectrum utilization: 80%), 20 (spectrum utilization: 90%), or 21 (spectrum utilization: 95%).

FIG. 16 illustrates a structure of a terminal according to an embodiment of the disclosure.

Referring to FIG. 16, the terminal may include a transceiver 1610, a controller 1620, and a storage unit 1630. In the disclosure, the controller 1620 may be defined as a circuit, an application-specific integrated circuit, or at least one processor.

The transceiver 1610 may transmit or receive a signal to or from other network entities. The transceiver 1610 may perform signal transmission and reception of the terminal of the disclosure described above.

The controller 1620 may control the overall operation of the terminal according to the embodiments proposed in the disclosure. The controller 1620 may obtain synchronization through an SSB according to various embodiments of the disclosure, process parameters configured based on a subcarrier spacing, and control transmission and reception of a PUSCH and a PDSCH by using a processing time.

In addition, the controller 1620 may perform control to identify whether a frequency band accessed by the terminal uses a bandwidth narrower than a preconfigured bandwidth, when the bandwidth narrower than the preconfigured bandwidth is used, determine a subcarrier spacing (SCS) smaller than a preconfigured SCS, and obtain a synchronization signal block (SSB) by using the determined SCS. In addition, a control resource set0 (CORESET) for a system information block (SIB1) may be identified based on a master information block (MIB) of the SSB, and the CORESET may be identified based on the determined SCS. In addition, a symbol to which a primary synchronization signal (PSS) of the SSB is mapped, a symbol to which a secondary synchronization signal (SSS) is mapped, and a symbol to which a physical broadcast channel (PBCH) is mapped may be discontinuously located. In addition, when an SCS lower than 15 kHz is used, the maximum number of SSBs which can be mapped to a half frame may be 1 or 2. In addition, when the SCS lower than 15 kHz is used, the minimum transmission period of the SSB may be 10 ms or greater.

The storage unit 1630 may store at least one of information transmitted or received through the transceiver 1610 and information generated through the controller 1620.

FIG. 17 is a diagram illustrating a structure of a base station according to an embodiment of the disclosure.

Referring to FIG. 17, the base station may include a transceiver 1710, a controller 1720, and a storage unit 1730. In the disclosure, the controller 1720 may be defined as a circuit, an application-specific integrated circuit, or at least one processor.

The transceiver 1710 may transmit or receive a signal to or from other network entities.

The controller 1720 may control the overall operation of the base station according to the embodiments proposed in the disclosure. The controller 1720 may configure an SSB according to various embodiments of the disclosure, process parameters configured based on a subcarrier spacing, and control transmission and reception of a PUSCH and a PDSCH by using a processing time.

In addition, the controller 1720 may perform control to identify whether a frequency band operated by the base station uses a bandwidth narrower than a preconfigured bandwidth, when the bandwidth narrower than the preconfigured bandwidth is used, determine a subcarrier spacing (SCS) smaller than a preconfigured SCS, generate a synchronization signal block (SSB) by using the determined SCS, and transmit the SSB. In addition, a control resource set0 (CORESET) for a system information block (SIB 1) may be identified based on a master information block (MIB) of the SSB, and the CORESET may be identified based on the determined SCS. In addition, a symbol to which a primary synchronization signal (PSS) of the SSB is mapped, a symbol to which a secondary synchronization signal (SSS) is mapped, and a symbol to which a physical broadcast channel (PBCH) is mapped may be discontinuously located. In addition, when an SCS lower than 15 kHz is used, the maximum number of SSBs which can be mapped to a half frame may be 1 or 2. In addition, when the SCS lower than 15 kHz is used, the minimum transmission period of the SSB may be 10 ms or greater.

The storage unit 1730 may store at least one of information transmitted or received through the transceiver 1710 and information generated through the controller 1720.

The methods according to various embodiments described in the claims or the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments of the disclosure as defined by the appended claims and/or disclosed herein.

The programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. Further, a plurality of such memories may be included in the electronic device.

In addition, the programs may be stored in an attachable storage device which may access the electronic device through communication networks such as the Internet, Intranet, Local Area Network (LAN), Wide LAN (WLAN), and Storage Area Network (SAN) or a combination thereof. Such a storage device may access the electronic device via an external port. Further, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Furthermore, the above respective embodiments may be employed in combination, as necessary. For example, a part of one embodiment of the disclosure may be combined with a part of another embodiment to operate a base station and a terminal. Furthermore, the embodiments may also be applied to other communication systems, and other variants based on the technical idea of the embodiments may also be implemented.

## Claims

1. A method performed by a base station in a wireless communication system, the method comprising:

    identifying whether a frequency band operated by the base station uses a bandwidth narrower than a preconfigured bandwidth;
    in case that the bandwidth narrower than the preconfigured bandwidth is used, determining a subcarrier spacing (SCS) smaller than a preconfigured SCS;
    generating a synchronization signal block (SSB) by using the determined SCS; and
    transmitting the SSB,
    wherein the determined SCS is lower than 15 kHz.

2. The method of claim 1, wherein control resource set0 (CORESET) for a system information block (SIB 1) is identified based on a master information block (MIB) of the SSB, and
    wherein the CORESET is identified based on the determined SCS.

3. The method of claim 1, wherein a symbol to which a primary synchronization signal (PSS) of the SSB is mapped, a symbol to which a secondary synchronization signal (SSS) is mapped, and a symbol to which a physical broadcast channel (PBCH) is mapped are discontinuously located.

4. The method of claim 1, wherein in case that the SCS lower than 15 kHz is used, a maximum number of SSBs which can be mapped to a half frame is 1 or 2, and
    wherein in case that the SCS lower than 15 kHz is used, a minimum transmission period of the SSB is 10 ms or greater.

5. A method performed by a terminal in a wireless communication system, the method comprising:

    identifying whether a frequency band accessed by the terminal uses a bandwidth narrower than a preconfigured bandwidth;
    in case that the bandwidth narrower than the preconfigured bandwidth is used, determining a subcarrier spacing (SCS) smaller than a preconfigured SCS; and
obtaining a synchronization signal block (SSB) by using the determined SCS,
wherein the determined SCS is lower than 15 kHz.

6. The method of claim 5, wherein control resource set0 (CORESET) for a system information block (SIB 1) is identified based on a master information block (MIB) of the SSB, and
wherein the CORESET is identified based on the determined SCS.

7. The method of claim 5, wherein a symbol to which a primary synchronization signal (PSS) of the SSB is mapped, a symbol to which a secondary synchronization signal (SSS) is mapped, and a symbol to which a physical broadcast channel (PBCH) is mapped are discontinuously located.

8. The method of claim 5, wherein in case that the SCS lower than 15 kHz is used, a maximum number of SSBs which can be mapped to a half frame is 1 or 2, and
wherein in case that the SCS lower than 15 kHz is used, a minimum transmission period of the SSB is 10 ms or greater.

9. A base station in a wireless communication system, the base station comprising:

a transceiver; and
a controller configured to identify whether a frequency band operated by the base station uses a bandwidth narrower than a preconfigured bandwidth, in case that the bandwidth narrower than the preconfigured bandwidth is used, to determine a subcarrier spacing (SCS) smaller than a preconfigured SCS, to generate a synchronization signal block (SSB) by using the determined SCS, and to transmit the SSB, wherein the determined SCS is lower than 15 kHz.

10. The base station of claim 9, wherein control resource set0 (CORESET) for a system information block (SIB 1) is identified based on a master information block (MIB) of the SSB, and
wherein the CORESET is identified based on the determined SCS.

11. The base station of claim 9, wherein a symbol to which a primary synchronization signal (PSS) of the SSB is mapped, a symbol to which a secondary synchronization signal (SSS) is mapped, and a symbol to which a physical broadcast channel (PBCH) is mapped are discontinuously located.

12. The base station of claim 9, wherein in case that the SCS lower than 15 kHz is used, a maximum number of SSBs which can be mapped to a half frame is 1 or 2, and
wherein in case that the SCS lower than 15 kHz is used, a minimum transmission period of the SSB is 10 ms or greater.

13. A terminal in a wireless communication system, the terminal comprising:

a transceiver; and
a controller configured to identify whether a frequency band accessed by the terminal uses a bandwidth narrower than a preconfigured bandwidth, in case that the bandwidth narrower than the preconfigured bandwidth is used, to determine a subcarrier spacing (SCS) smaller than a preconfigured SCS, and to obtain a synchronization signal block (SSB) by using the determined SCS,
wherein the determined SCS is lower than 15 kHz.

14. The terminal of claim 13, wherein control resource set0 (CORESET) for a system information block (SIB 1) is identified based on a master information block (MIB) of the SSB, and
wherein the CORESET is identified based on the determined SCS.

15. The terminal of claim 13, wherein a symbol to which a primary synchronization signal (PSS) of the SSB is mapped, a symbol to which a secondary synchronization signal (SSS) is mapped, and a symbol to which a physical broadcast channel (PBCH) is mapped are discontinuously located, and

wherein in case that the SCS lower than 15 kHz is used, a maximum number of SSBs which can be mapped to a half frame is 1 or 2, and
wherein in case that the SCS lower than 15 kHz is used, a minimum transmission period of the SSB is 10 ms or greater.

# FIG. 1

# FIG. 2

UE

201 — NR SDAP

205 — NR PDCP

210 — NR RLC

215 — NR MAC

220 — NR PHY

NR gNB

245 — NR SDAP

240 — NR PDCP

235 — NR RLC

230 — NR MAC

225 — NR PHY

# FIG. 3

One subframe (310)

$N_{symb}^{subframe,\mu}$ OFDM symbols

1 OFDM symbols (302)

1 subcarrier (303)

$k = N_{RB,x}^{max,\mu} N_{sc}^{RB} - 1$

Resource block $N_{sc}^{RB}$ Subcarriers (304)

$N_{RB}^{\mu} N_{sc}^{RB}$ subcarriers

Resource element (k,l) (301)

Frequency

$k = 0$

$\bar{l} = 0$

$\bar{l} = 14 \cdot 2^{\mu} - 1$

Time

FIG. 4

EP 4 391 683 A1

# FIG. 5

BWP#1
(501)

BWP#2
(502)

UE bandwidth
(500)

Frequency

FIG. 6

# FIG. 7

| SCS | Bandwidth |
|---------|-----------|
| 15 kHz | 3.6 MHz |
| 30 kHz | 7.2 MHz |
| 120 kHz | 28.8 MHz |
| 240 kHz | 57.6 MHz |

FIG. 8

SSB (μ=15kHz)

SSB (μ=7.5kHz)

# FIG. 9

Subframe (1ms)

LTE (15kHz)

| 901 | 903 | 905 | 907 |

LTE CRS | LTE CRS | LTE CRS | LTE CRS

0 1 2 3 4 5 6 7 8 9 10 11 12 13

NR
(30kHz, pattern2)

...

SS/PBCH block | SS/PBCH block | SS/PBCH block | SS/PBCH block

0 1 2 3 4 5 6 7 8 9 10 11 12 13 0 1 2 3 4 5 6 7 8 9 10 11 12 13

911 913 915 917

NR slot (0.5ms, 30kHz)        NR slot (0.5ms, 30kHz)

EP 4 391 683 A1

FIG. 10

Subframe (1ms)

LTE ( $\mu$ =15kHz)

CRS CRS CRS CRS CRS CRS

PSS

PBCH

PBCH
SSS
PBCH

PBCH

12RBs

20RBs

4 OFDM symbols

SSB ( $\mu$ =7.5kHz)

# FIG. 11

Subframe (1ms)

LTE ($\mu$=15kHz)

CRS CRS CRS CRS CRS CRS

PSS

PBCH

PBCH
SSS
PBCH

PBCH

12RBs

20RBs

1 OFDM symbols

SSB ($\mu$=7.5kHz)

EP 4 391 683 A1

# FIG. 12

# FIG. 13

EP 4 391 683 A1

# FIG. 14

```
          ┌──────────────┐
          │    START     │
          └──────┬───────┘
                 │
                 ▼
   ┌───────────────────────────────────┐
   │ Identify preconfigured band or    │ ～ 1410
   │ bandwidth                         │
   └─────────────────┬─────────────────┘
                     │
                     ▼
   ┌───────────────────────────────────┐
   │          Determine SCS            │ ～ 1420
   └─────────────────┬─────────────────┘
                     │
                     ▼
   ┌───────────────────────────────────┐
   │        Detect and obtain SSB      │ ～ 1430
   └─────────────────┬─────────────────┘
                     │
                     ▼
   ┌───────────────────────────────────┐
   │  Perform communication to which   │ ～ 1440
   │  SCS-related parameter is applied  │
   └─────────────────┬─────────────────┘
                     │
                     ▼
          ┌──────────────┐
          │     END      │
          └──────────────┘
```

# FIG. 15

```
        ┌─────────────┐
        │    START    │
        └─────────────┘
               │
               ▼
┌──────────────────────────────────┐
│ Identify preconfigured band or bandwidth │ ～ 1510
└──────────────────────────────────┘
               │
               ▼
┌──────────────────────────────────┐
│          Determine SCS           │ ～ 1520
└──────────────────────────────────┘
               │
               ▼
┌──────────────────────────────────┐
│     Generate and transmit SSB    │ ～ 1530
└──────────────────────────────────┘
               │
               ▼
┌──────────────────────────────────┐
│   Perform communication to which │
│   SCS-related parameter is applied │ ～ 1540
└──────────────────────────────────┘
               │
               ▼
        ┌─────────────┐
        │     END     │
        └─────────────┘
```

FIG. 16

1620

Controller

1610
Transceiver

1630
Storageunit

FIG. 17

1720

1710

Controller

Transceiver

1730

Storageunit

**EP 4 391 683 A1**

## INTERNATIONAL SEARCH REPORT

| | International application No. |
|---|---|
| | **PCT/KR2022/009731** |

**A.    CLASSIFICATION OF SUBJECT MATTER**

**H04W 72/04**(2009.01)i; **H04L 5/00**(2006.01)i; **H04J 11/00**(2006.01)i; **H04W 48/10**(2009.01)i

According to International Patent Classification (IPC) or to both national classification and IPC

**B.    FIELDS SEARCHED**

Minimum documentation searched (classification system followed by classification symbols)

H04W 72/04(2009.01); H04L 27/26(2006.01); H04L 5/00(2006.01); H04W 56/00(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: operating band, bandwidth, subcarrier spacing, SSB

**C.    DOCUMENTS CONSIDERED TO BE RELEVANT**

| Category* | Citation of document, with indication, where appropriate, of the relevant passages | Relevant to claim No. |
|---|---|---|
| A | US 2021-0160036 A1 (QUALCOMM INCORPORATED) 27 May 2021 (2021-05-27)<br>    See paragraphs [0064]-[0068] and [0119]-[0124]; and figures 4 and 11. | 1-15 |
| A | US 2021-0084604 A1 (GUANGDONG OPPO MOBILE TELECOMMUNICATIONS CORP., LTD.) 18 March 2021 (2021-03-18)<br>    See paragraphs [0086]-[0110]; and figures 1-3. | 1-15 |
| A | US 2021-0250882 A1 (TELEFONAKTIEBOLAGET LM ERICSSON (PUBL)) 12 August 2021 (2021-08-12)<br>    See paragraphs [0061]-[0086]; and figures 3 and 6A-7A. | 1-15 |
| A | WO 2019-032614 A1 (LENOVO (SINGAPORE) PTE. LTD.) 14 February 2019 (2019-02-14)<br>    See paragraphs [0051]-[0066]; and figure 5. | 1-15 |
| A | WO 2020-168450 A1 (MEDIATEK SINGAPORE PTE. LTD.) 27 August 2020 (2020-08-27)<br>    See pages 2-3; and figure 3. | 1-15 |

☐ Further documents are listed in the continuation of Box C.        ☑ See patent family annex.

| | | |
|---|---|---|
| * | Special categories of cited documents: | "T"    later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X"    document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"    document member of the same patent family |

| Date of the actual completion of the international search | Date of mailing of the international search report |
|---|---|
| **05 October 2022** | **05 October 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2022/009731**

| Patent document cited in search report | | | Publication date (day/month/year) | Patent family member(s) | | | Publication date (day/month/year) |
|---|---|---|---|---|---|---|---|
| US | 2021-0160036 | A1 | 27 May 2021 | WO | 2021-108227 | A1 | 03 June 2021 |
| US | 2021-0084604 | A1 | 18 March 2021 | CN | 111527783 | A | 11 August 2020 |
| | | | | EP | 3790333 | A1 | 10 March 2021 |
| | | | | EP | 3790333 | A4 | 12 May 2021 |
| | | | | WO | 2019-213955 | A1 | 14 November 2019 |
| US | 2021-0250882 | A1 | 12 August 2021 | AR | 115961 | A1 | 17 March 2021 |
| | | | | AU | 2019-322983 | A1 | 20 February 2020 |
| | | | | AU | 2019-322983 | B2 | 23 December 2021 |
| | | | | CN | 112567846 | A | 26 March 2021 |
| | | | | EP | 3837907 | A1 | 23 June 2021 |
| | | | | KR | 10-2021-0031734 | A | 22 March 2021 |
| | | | | WO | 2020-034792 | A1 | 20 February 2020 |
| WO | 2019-032614 | A1 | 14 February 2019 | BR | 112020002929 | A2 | 11 August 2020 |
| | | | | CN | 111034284 | A | 17 April 2020 |
| | | | | EP | 3665978 | A1 | 17 June 2020 |
| | | | | KR | 10-2020-0035037 | A | 01 April 2020 |
| | | | | US | 10694480 | B2 | 23 June 2020 |
| | | | | US | 2019-0053174 | A1 | 14 February 2019 |
| | | | | US | 2020-0383071 | A1 | 03 December 2020 |
| WO | 2020-168450 | A1 | 27 August 2020 | CN | 111684842 | A | 18 September 2020 |
| | | | | TW | 202034711 | A | 16 September 2020 |
| | | | | US | 2022-0086782 | A1 | 17 March 2022 |
| | | | | WO | 2020-142999 | A1 | 16 July 2020 |
| | | | | WO | 2020-143756 | A1 | 16 July 2020 |

Form PCT/ISA/210 (patent family annex) (July 2022)